(19)

Europäisches
Patentamt
European
Patent Office
Office européen
des brevets

(11) **EP 4 019 898 A1**

(12) **EUROPEAN PATENT APPLICATION**

(43) Date of publication:
**29.06.2022 Bulletin 2022/26**

(21) Application number: **21217021.1**

(22) Date of filing: **22.12.2021**

(51) International Patent Classification (IPC):
*G01C 21/00* (2006.01)    *G01C 21/36* (2006.01)
*G06T 7/70* (2017.01)    *G06V 20/50* (2022.01)

(52) Cooperative Patent Classification (CPC):
**G01C 21/005; G01C 21/3602; G06V 20/50;
H04N 5/232**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.12.2020 US 202017131195**

(71) Applicant: **HERE Global B.V.
5611 ZT Eindhoven (NL)**

(72) Inventor: **Kappi, Jani
Ylöjärvi (FI)**

(74) Representative: **Cohausz & Florack
Patent- & Rechtsanwälte
Partnerschaftsgesellschaft mbB
Bleichstraße 14
40211 Düsseldorf (DE)**

(54) **METHOD, APPARATUS, AND SYSTEM FOR CAPTURING AN IMAGE SEQUENCE FOR A VISUAL POSITIONING SERVICE REQUEST**

(57)    An approach is provided for capturing an image sequence for a visual positioning service request. The approach involves, for example, retrieving sensor data collected from one or more sensors of a device. The approach also involves processing the sensor data to estimate a motion, a pose, a gesture, or a combination thereof associated with the device. The approach further involves initiating an automatic capture of a sequence of at least two images by a camera sensor of the device based on determining that the motion, the pose, or a combination thereof meets one or more predetermined criteria. The approach further involves providing the sequence of the least two images, one or more features extracted from the sequence of the least two images, or a combination thereof as an output to generate a visual positioning service request.

FIG. 3

**Description**

BACKGROUND

Location-based service providers (e.g., mapping and navigation service providers) are continually challenged to overcome limitations of current positioning technologies. For example, satellite-based positioning systems (e.g., GPS, GLONASS, etc.) are ubiquitous but can suffer from limitations in accuracy and coverage, particularly in indoor environments other environments wherein satellite positioning signals are blocked or suffer from interference. As an alternative to satellite-based positioning technologies, service providers are developing visual positioning services (VPS) that use image analysis to provide positioning. As a result, service providers face significant challenges to ensuring that images that are suitable for visual positioning can be easily captured by end user devices.

SOME EXAMPLE EMBODIMENTS

Therefore, there is a need for an approach for capturing an images sequence for a visual positioning service (VPS) request that, for instance, reduces the burdens associated with capturing such images.

According to one embodiment, a method comprises retrieving sensor data collected from one or more sensors of a device. The method also comprises processing the sensor data to estimate a motion, a pose, a gesture, or a combination thereof associated with the device. The method further comprises initiating an automatic capture of a sequence of at least two images by a camera sensor of the device based on determining that the motion, the pose, or a combination thereof meets one or more predetermined criteria. The method further comprises providing the sequence of the least two images, one or more features extracted from the sequence of the least two images, or a combination thereof as an output to generate a visual positioning service request.

According to another embodiment, an apparatus comprises at least one processor, and at least one memory including computer program code for one or more computer programs, the at least one memory and the computer program code configured to, with the at least one processor, cause, at least in part, the apparatus to retrieve sensor data collected from one or more sensors of a device. The apparatus is also caused to process the sensor data to estimate a motion, a pose, a gesture, or a combination thereof associated with the device. The apparatus is further caused to initiate an automatic capture of a sequence of at least two images by a camera sensor of the device based on determining that the motion, the pose, or a combination thereof meets one or more predetermined criteria. The apparatus is further caused to provide the sequence of the least two images, one or more features extracted from the sequence of the least two images, or a combination thereof as an output to generate a visual positioning service request.

According to another embodiment, a non-transitory computer-readable storage medium carries one or more sequences of one or more instructions which, when executed by one or more processors, cause, at least in part, an apparatus to retrieve sensor data collected from one or more sensors of a device. The apparatus is also caused to process the sensor data to estimate a motion, a pose, a gesture, or a combination thereof associated with the device. The apparatus is further caused to initiate an automatic capture of a sequence of at least two images by a camera sensor of the device based on determining that the motion, the pose, or a combination thereof meets one or more predetermined criteria. The apparatus is further caused to provide the sequence of the least two images, one or more features extracted from the sequence of the least two images, or a combination thereof as an output to generate a visual positioning service request.

According to another embodiment, an apparatus comprises means for retrieving sensor data collected from one or more sensors of a device. The apparatus also comprises means for processing the sensor data to estimate a motion, a pose, a gesture, or a combination thereof associated with the device. The apparatus further comprises means for initiating an automatic capture of a sequence of at least two images by a camera sensor of the device based on determining that the motion, the pose, or a combination thereof meets one or more predetermined criteria. The apparatus further comprises means for providing the sequence of the least two images, one or more features extracted from the sequence of the least two images, or a combination thereof as an output to generate a visual positioning service request.

In addition, for various example embodiments of the invention, the following is applicable: a method comprising facilitating a processing of and/or processing (1) data and/or (2) information and/or (3) at least one signal, the (1) data and/or (2) information and/or (3) at least one signal based, at least in part, on (or derived at least in part from) any one or any combination of methods (or processes) disclosed in this application as relevant to any embodiment of the invention.

For various example embodiments of the invention, the following is also applicable: a method comprising facilitating access to at least one interface configured to allow access to at least one service, the at least one service configured to perform any one or any combination of network or service provider methods (or processes) disclosed in this application.

For various example embodiments of the invention, the following is also applicable: a method comprising facilitating creating and/or facilitating modifying (1) at least one device user interface element and/or (2) at least one device user interface functionality, the (1) at least one device user interface element and/or (2) at least one device user interface functionality based, at least in part, on data and/or information resulting from one or any combination of methods or processes disclosed in this application as relevant to any embodiment of the invention, and/or at least one signal resulting from one or any combination of methods (or processes) disclosed in this application as relevant to any embodiment of the invention.

For various example embodiments of the invention, the following is also applicable: a method comprising creating and/or modifying (1) at least one device user interface element and/or (2) at least one device user interface functionality, the (1) at least one device user interface element and/or (2) at least one device user interface functionality based at least in part on data and/or information resulting from one or any combination of methods (or processes) disclosed in this application as relevant to any embodiment of the invention, and/or at least one signal resulting from one or any combination of methods (or processes) disclosed in this application as relevant to any embodiment of the invention.

In various example embodiments, the methods (or processes) can be accomplished on the service provider side or on the mobile device side or in any shared way between service provider and mobile device with actions being performed on both sides.

For various example embodiments, the following is applicable: An apparatus comprising means for performing a method of the claims.

Still other aspects, features, and advantages of the invention are readily apparent from the following detailed description, simply by illustrating a number of particular embodiments and implementations, including the best mode contemplated for carrying out the invention. The invention is also capable of other and different embodiments, and its several details can be modified in various obvious respects, all without departing from the spirit and scope of the invention. Accordingly, the drawings and description are to be regarded as illustrative in nature, and not as restrictive.

BRIEF DESCRIPTION OF THE DRAWINGS

The embodiments of the invention are illustrated by way of example, and not by way of limitation, in the figures of the accompanying drawings:

FIG. 1 is a diagram of a system capable of capturing a sequence of images for a visual positioning service (VPS) request, according to example embodiment(s);
FIG. 2 is a diagram of a components of an imaging system capable of capturing a sequence of images for a VPS request, according to example embodiment(s);
FIG. 3 is a flowchart of a process for capturing a sequence of images for a VPS request, according to example embodiment(s);
FIG. 4 is a diagram of example data windows for dividing a motion pattern to detect motions and/or gestures, according to example embodiments(s);
FIG. 5 is a diagram of a model for classifying motion states, according to example embodiment(s);
FIG. 6 is a block diagram of an example motion state detection process using a multivariate maximum likelihood algorithm, according to example embodiment(s);
FIG. 7 is a diagram of a device orientation in a three-dimensional space, according to embodiment(s);
FIGs. 8A and 8B are diagrams of example coordinate frames for detecting a device pose, according to example embodiment(s);
FIG. 9 is a ladder diagram of a VPS request sequence, according to example embodiment(s);
FIGs. 10A and 10B are a ladder diagram of a VPS request sequence with image capturing failures, according to example embodiment(s);
FIG. 11 is a diagram of a geographic database, according to example embodiment(s);
FIG. 12 is a diagram of hardware that can be used to implement example embodiment(s);
FIG. 13 is a diagram of a chip set that can be used to implement example embodiment(s); and
FIG. 14 is a diagram of a mobile terminal (e.g., handset or vehicle or part thereof) that can be used to implement example embodiment(s).

DESCRIPTION OF SOME EMBODIMENTS

Examples of a method, apparatus, and computer program for providing an augmented reality (AR) overlay based on pre-selected surfaces are disclosed. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

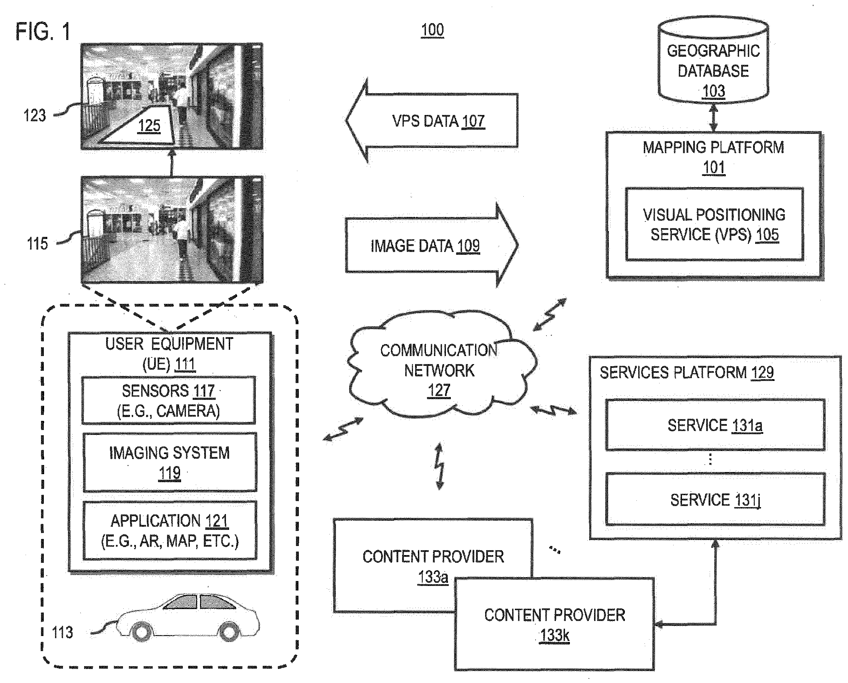

FIG. 1 is a diagram of a system capable of capturing a sequence of images for a visual positioning service (VPS) request, according to example embodiment(s). Mapping service providers (e.g., a service provider operating a mapping platform 101) have invested significant resources to create highly detailed digital map (e.g., a geographic database 103) of the world. For example, high-definition (HD) map data can represent a geographic environment (e.g., both outdoor and indoor environments) and its features with centimeter-level accuracy or better. The accuracy of such digital map data can support the visual positioning services (e.g., a visual positioning service (VPS) 105 of the mapping platform 101) that determine positioning data (e.g., VPS data 107) by, for instance, matching the features visible in images (e.g., image data 109) captured by a user equipment (UE) device 111, vehicle 113, and/or any other imaging capable device against the known locations of the features in the geographic database 103 to determine a corresponding location and/or related other data (e.g., orientation, floor level, venue information, related uncertainty estimates, etc.) comprising VPS data 107.

For example, the UE 111, vehicle 113, and/or other device can capture one or more images 115, for instance, via one or more sensors 117 (e.g., a camera senor) associated with an imaging system 119 (e.g., a system comprising imaging hardware, software, circuitry, etc.) used for capturing images for VPS requests (e.g., images 115 submitted as image data 109 of a VPS request to the VPS 105). In response, the VPS 105 returns corresponding VPS data 107 which can used by the requesting device for positioning with relying on traditional positioning technology (e.g., satellite-based location, radio signal triangulation, etc.). Accordingly, VPS 105 or equivalent services enable devices to obtain positioning data in areas where traditional positioning technology may not be available or have accuracy to target levels (e.g., when operating indoors or other environments where satellite-based positioning signals may be blocked or suffer from interference). Because VPS data 107 can also include data such as floor levels, physical surfaces, etc., the data can be used for augmented reality (AR) such provided by an AR application 121 executing on the device 111, vehicle 113, or other device. The AR application 121 can use the VPS data 107 to generate an AR image 123 which overlays AR data 125 realistically of device imagery.

Generally, services providing positioning through visual means (e.g., VPS 105) depend on an incoming sequence of images (e.g., image data 109 comprising a sequence of at least two images) that are aligned in both spatial and temporal domains. The alignment in spatial and temporal domains are typically achieved by using certain image capturing criteria on the image capture device (e.g., UE 111) such as, but not limited to, the following:

- The device is to be upright in portrait or landscape mode. A misalignment of 10 degrees (or other designated range) can be accepted.
- The device is to remain stationary and/or the translation and rotation between the images is measurable.

These and/or other similar criteria are intended to ensure that the image data 109 (e.g., a sequence of at least two images) being transmitted from the UE 111 to the VPS 105 (e.g., in the form of a VPS request over a communication network 127) meets minimum requirements to achieve a target level of positioning accuracy or confidence.

Traditionally, there are different ways to ensure good quality images with enough separation in-between to achieve optimal VPS results. For example, the most involved would be to instruct the user of the device (e.g., UE 111) via on screen guidance how to alight and capture the images. However, this approach would be difficult to achieve when the solution is integrated into a Software Development Kit, where such user guidance instructions would be detached from the functions/methods performing the actual capture of the image sequence. As a result, service providers face significant technical challenges with respect to minimizing both developer and user interaction when acquiring an image sequence for VPS requests because such interactions may be error prone, introduce inaccuracies in the process, and reduce the quality of the user experience with such applications.

To address these technical challenges, the system 100 introduces a capability to automate image capture and hide as much as possible the process from the user instead of explicitly guiding the user. In one embodiment, the system 100 (e.g., the imaging system 119 of the UE 111 or equivalent) detects and evaluates the motion, gesture, and/or pose of the capturing device to determine when the device is positioned or oriented within a predetermined range that facilities the capture of an image or image sequence (e.g., sequence of at least two images) for VPS requests, and then automatically initiates the capture of the image or image sequence (e.g., without explicitly guiding the user). In example embodiments in which the system 100 captures an image sequence of at least two images, the determination of the device position or orientation can also advantageously ensure that images are different enough to provide additional information, for instance, to improve the accuracy and/or confidence visual positioning. Accordingly, it is contemplated that where embodiments are described with respect to capturing "an image sequence of at least two images," those embodiments are also applicable to capturing and processing a single image for VPS requests.

In one embodiment, device motion, gesture, and/or pose estimation can be performed using steps such as, but not limited to, the following or equivalent:

- Device motion estimation using accelerometers (e.g., sensors 117 of the UE 111, vehicle 113, and/or other device).
- Device runtime pose estimation: orientation estimation using accelerometers and gyros (e.g., sensors 117), translation (and orientation) estimation using visual inertial odometer (e.g., relying on input from Augmented Reality packages associated with the operating of the UE 111 or other device such as ARcore for Android-based devices, ARkit for iOS-based devices, or equivalent).
- Gesture recognition (e.g., lifting the device): gesture tracking using orientation estimation and/or motion pattern tracking (e.g., based on data from sensors 117).

In one embodiment, the system 100 can dynamically monitor the quality of the capture sequence or one or more images in the sequence and initiate a recapture of one or more of the images. For example, the system 100 can perform an image blur detection and re-capture. In response to detecting image blur, e.g. by applying a Laplacian Variation Calculation or equivalent, the system 100 can trigger image recapture.

In yet another embodiment, instead of or in addition to providing the captured image sequence in a VPS request payload, the system 100 can pre-process the image sequence or one or more images in the sequence to advantageously increases server side performance and accuracy (e.g., performance and/or accuracy of the VPS 105). For example, the system 100 can employ image segmentation and clustering (e.g., using runtime machine learning (ML) segmentation) locally on the image capturing device. In another example, one or more features of the images (e.g., detected edges, corners, surfaces, etc.) can be extracted from the image sequence locally at the device. For example, the image capturing device can be configured with a machine learning model that has been previously trained detect the features of interest in the captured images. Training of the machine learning model, for instance, refers to using a machine learning approach to ingest ground truth data (e.g., images labeled with ground truth features of interest) and determine parameters that will result in predicting the features at a target level of accuracy.

The features of interest can depend on the use case or domain. In an indoor positioning use case, the features can include features that are typically present in an indoor environment including, but not limited to, floors walls, ceilings, windows, furniture, and/or the like. In one embodiment, the features of interest can include those that are used by the VPS 105 for visual positioning. Accordingly, the features of interest can be those features (e.g., indoor features or features in other domains such as but not limited to features in outdoor environments, etc.) that are previously mapped (e.g., in the geographic database 103) and accessible to the VPS 105 for visual positioning. In example embodiments, the results of the additional processing (e.g., image segmentation, feature extraction, etc. using trained machine learning models) can then be sent to the server side (e.g., VPS 105, mapping platform 101, etc.). In one embodiment, the system 100 can increase privacy or otherwise avoid potential privacy concerns associated with transmitting raw images, and instead transmit only the image segmentation or other extracted features in a VPS request. In this way, potentially privacy-sensitive data (e.g., raw images) are not exposed beyond the image capturing device.

By providing for automatic capture of an image sequence for VPS requests, the system 100 provides various embodiments with at least the following advantages:

- Minimal user interactions for obtaining a usable sequence of images;
- Practical for on-device implementation;
- Robust image capture in varying lighting conditions especially indoors; and
- Fault tolerant to obstructed scenes in crowded indoor environments.

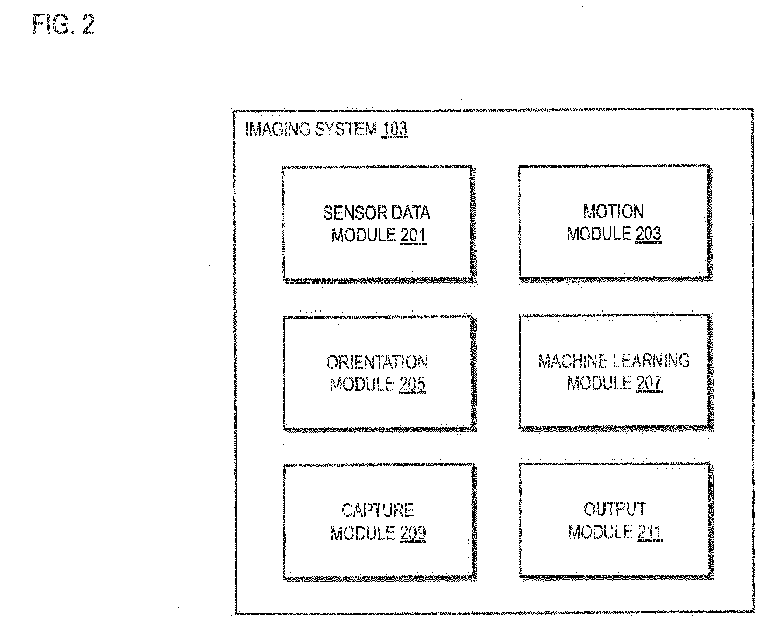

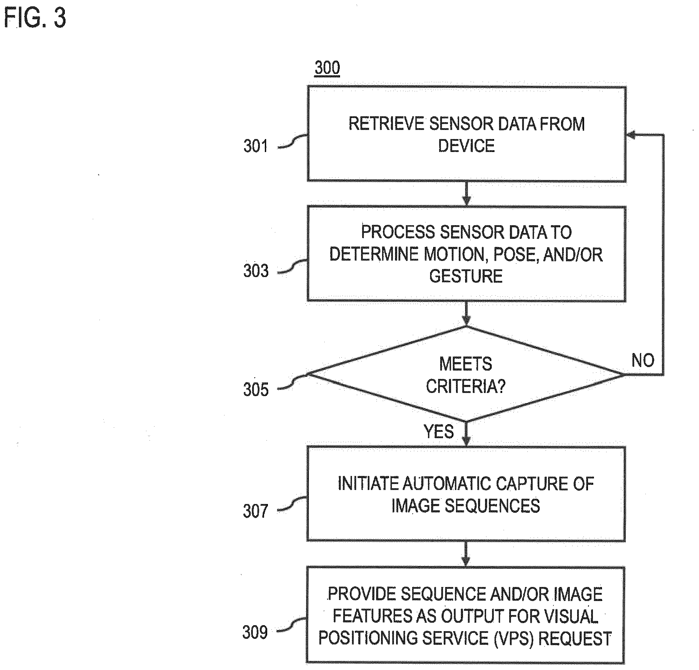

In one embodiment, as shown in FIG. 2, the imaging system 119 (e.g., of the UE 111, vehicle 113, or other device) includes one or more components for capturing an image sequence for a VPS request according to the various embodiments described herein. It is contemplated that the functions of the components of the imaging system 119 may be combined or performed by other components of equivalent functionality. As shown, in one embodiment, the imaging system 119 includes a sensor data module 201, a motion module 203, an orientation module 205, a machine learning module 207, a capture module 209, and an output module 211. The above presented modules and components of the imaging system 119 can be implemented in hardware, firmware, software, or a combination thereof. Though depicted as an entity in the UE 111 (or other image capturing device) in FIG. 1, it is contemplated that the imaging system 119 may be implemented as a module of any of the components of the system 100 (e.g., a component of the mapping platform 101, VPS 105, vehicle 113, services platform 129, services 131a-131j (also collectively referred to as services 131), content providers 133a-133k (also collectively referred to as content providers 133), and/or the like). In another embodiment, one or more of the modules 201-211 may be implemented as a cloud-based service, local service, native application, or combination thereof. The functions of the imaging system 119 and modules 201-211 are discussed with respect to FIGs. 3-11 below.

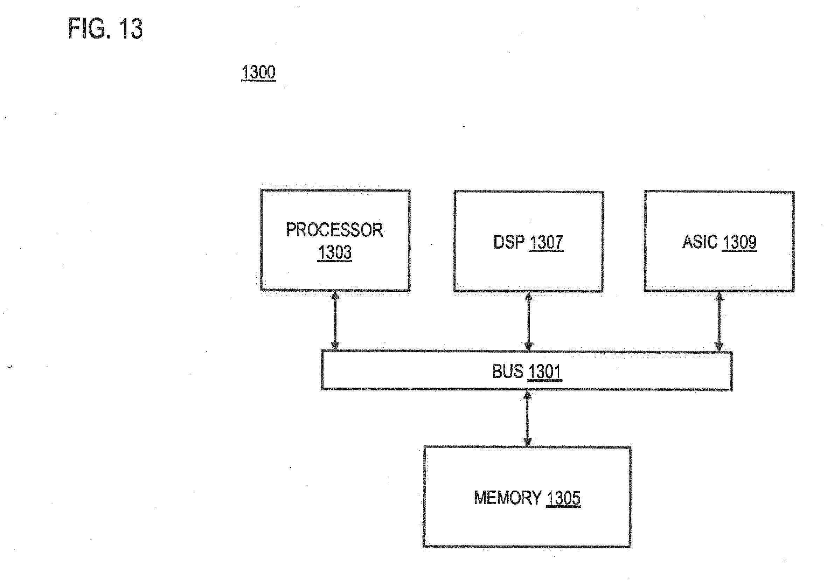

FIG. 3 is a flowchart of a process 300 for capturing a sequence of images for a VPS request, according to example embodiment(s). In various embodiments, the imaging system 119 and/or any of the modules 201-211 may perform one or more portions of the process 300 and may be implemented in, for instance, a chip set including a processor and a memory as shown in FIG. 13. As such, the imaging system 119 and/or any of the modules 201-211 can provide means for accomplishing various parts of the process 300, as well as means for accomplishing embodiments of other processes described herein in conjunction with other components of the system 100. Although the process 300 is illustrated and described as a sequence of steps, it is contemplated that various embodiments of the process 300 may be performed in any order or combination and need not include all of the illustrated steps.

In step 301, the sensor data module 201 retrieve sensor data collected from one or more sensors (e.g., sensors 117) of a device (e.g., the UE 111, the vehicle 113, and/or any other imaging device). For example, the sensors can include an inertial measurement unity (IMU) sensor that combinations an accelerometer and a gyroscope, individual accelerometers or gyroscopes, and/or another type of sensor that is capable of detecting movements of the image capturing device and measure the intensity of the movements in terms of acceleration and rotational speeds. It is noted that the IMU, accelerometers, and gyroscopes are provided by way of illustration and not as limitations. Accordingly, any other equivalent sensors can be used in the embodiments described herein.

In one embodiment, the collection of the sensor data can be initiated based on one or more instructions or request to begin a VPS request for position. For example, a user of the UE 111 or other device can execute an application 121 (e.g., an AR application, mapping application, navigation application, and/or any other location-based application) that requests positioning data. It is contemplated that the sensor data collection can be continuous, on-demand, or according to a schedule set by the application 121 or other service that requests positioning data via the VPS 105.

In step 303, in one embodiment, the motion module 203 processes the sensor data to estimate a motion, a pose, a gesture, or a combination thereof associated with the device. More specifically, the motion module 203 can perform motion estimation and gesture recognition by processing the sensor data that are indicative of movements of the imaging device (e.g., the UE 111.

In one embodiment, the motion is estimated based on an accelerometer variance estimation. In other words, motion estimation can be achieved using simple accelerometer variance estimation. An accelerometer or equivalent sensor, for instance, can be used to sense the acceleration data of three spatial orthogonal axes in each motion (gesture) pattern in a certain sampling frequency. The variance estimate can be calculated from buffered accelerometer vector amplitude (e.g., total acceleration) measured over a fixed size time window (e.g., with each window containing the sensor data sensed within the particular time range or epoch associated with the window). A variance limit or threshold can then be applied to determine whether a device is in a moving or non-moving state. For example, a computed variance below the variance limit can result in classifying that the device is in a non-moving state, and a computed variance above the variance limit can result in classifying that the device is in a moving state. In one embodiment, the variance limits can be determined empirically for the given use-case (e.g., based on different types of devices, modes of transport, and/or any other context). In addition or alternatively, the variance limit can be based on a predetermined default value for when the use case is unknown of when there is not enough historical data to empirically determine the variance at a target level of confidence or accuracy.

In addition or as alternate to motion detection, the motion module 203 can be configured to detect or recognize gestures from the sensor data. For example, gesture recognition can be used to identify when the device is being lifted up or otherwise moved into a position that may be compatible with capturing images for VPS requests. In one embodiment, this means situations, for instance, where a user: (1) is initially is walking with a device (e.g., the UE 111) held in hand, and the user's hand is dangling freely at the user's side (e.g., where it may not be ideal to capture images for VPS requests); and (2) then stops and lifts the device to see through the screen in AR mode where the device could be aligned in portrait or landscape mode, thereby putting the device in a more ideal position to capture images for VPS requests. By way of example, "ideal" refers to the device being withing upright and/or orientation ranges specified for capturing images for VPS requests.

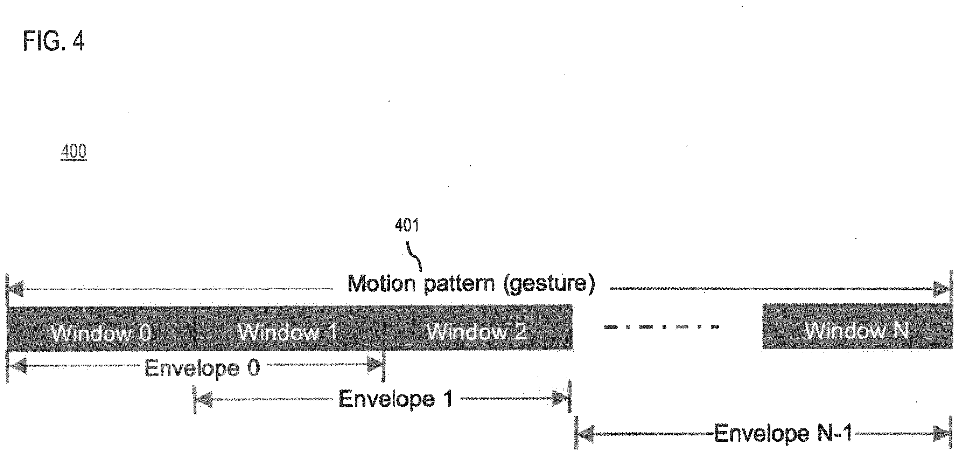

In one embodiment, the motion module 203 can apply multivariate feature recognition to allow a more robust motion estimation and to enable gesture recognition. To describe a motion pattern and distinguish the periods temporally from each other, the motion module 203 can process the sensor data to construct a motion pattern (e.g., a gesture or movement). As shown in the example 400 of FIG. 4, a motion pattern 401 is divided into N data windows (e.g., windows 0-*N*). In one embodiment, the windows are identical in length (e.g., a system default window length) and span adjacent but non-overlapping periods of time. Alternatively, the window can have different lengths that are determined based on other factors such as, but not limited, to data sparsity, intensity of movement, etc. Two adjacent data windows make up an envelope (e.g., window 0 and window 1 make up Envelope 0) such that envelops overlap at each window boundary between the first and last windows. In other words, the motion module 203 processes the sensor data to construct a motion pattern divided into a designated number of data windows respectively containing the sensor data based on time. Then, each two adjacent data windows of the designated number of data windows comprises an envelope.

In one embodiment, the motion module 203 extracting one or more sensor data features (e.g., as a feature vector or equivalent representation) from the sensor data in one or more envelopes of the motion pattern. The motion, the gesture, or a combination thereof is determined based on the one or more extracted sensor data features. By way of example, the feature vector (or other representation of the extracted data features) for a given envelope is made up by combining feature patterns, e.g., mean, energy and entropy in the frequency domain and variance of the amplitude and correlation among the axes in the time-space domain. In one embodiment, the feature-type set can also include orientation and target pose angle information to constrain the search space. In other words, the motion module 203 generates one or more feature vectors for the one or more envelopes based on the one or more extracted sensor data features, and then determines a motion state of the device based on the one or more feature vectors. The motion, the gesture, or a combination thereof is determined based on the motion state. The approach of the various embodiments described herein advantageously enable a more detailed identification of the gestures in different contextual environments.

In one embodiment, the motion module 203 performs motion and/or gesture detection using multivariate pattern recognition (e.g., based on the feature vectors extracted above). Motion states, for instance, are classified into categories such as, but not limited to: stationary, pedestrian, vehicle, and unknown. In one embodiment, state classification utilizes a maximum likelihood classification algorithm. Features for the classification are extracted from the three-axis accelerometer measurements as described above.

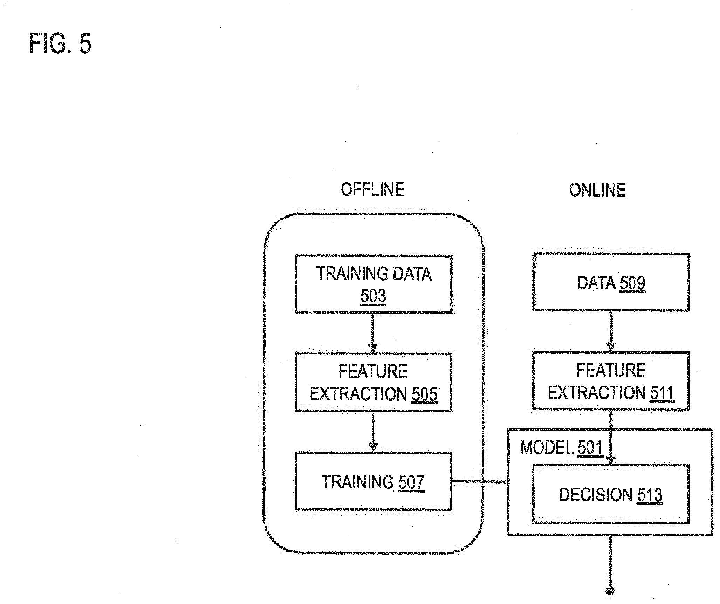

In one embodiment, the motion module 203 can interact with the machine learning module 207 train and use a machine learning model (e.g., neural network or equivalent) to classify a motion state based on the extracted data features of the sensor data. FIG. 5 is a diagram of a model 501 for classifying motion states, according to example embodiment(s). In the example of the FIG. 5, the model 501 is trained while it is offline (e.g., not actively accept classification requests). For example, training data 503 comprising ground truth sensor data that is labeled with respective known motion states. A feature extraction 505 is performed on the training data 503 to generate feature vectors as described above.

The feature extraction 505 along with the respective ground truth motion state labels are then used to perform a training 507 (e.g., supervised training or equivalent) of the model 501. By way of example, during the training 507, the machine learning module 207 feeds the feature vectors extracted from the training data 503 into the model 501 to determining a corresponding motion state classification using an initial set of model parameters. The machine learning module 207 then compares the predicted motion states to the ground truth motion state labels in the training data 503. The machine learning module 207 computes a loss function representing an accuracy of the predictions for the initial set of model parameters. The machine learning module 207 then incrementally adjusts the model parameters until the model 501 minimizes the loss function (e.g., achieves a target prediction accuracy). In other words, a "trained" machine learning model 501 for motion state classification is a machine learning model with parameters (e.g., coefficients, weights, etc.) adjusted to make accurate predictions with respect to the ground truth training data 503.

After the training 507 of the model 501, the model 501 can be used online to process sensor data 509. A feature extraction 511 is performed on the sensor data 509 to extract feature vectors as described above. The extracted features are feed into the model 501 to make a decision 513 of the motion state classification. In one embodiment, the decision 513 is based on a multivariate maximum likelihood algorithm such that the motion, the gesture, or a combination thereof is determined (or classified) based on applying a maximum likelihood classification algorithm on the one or more feature vectors.

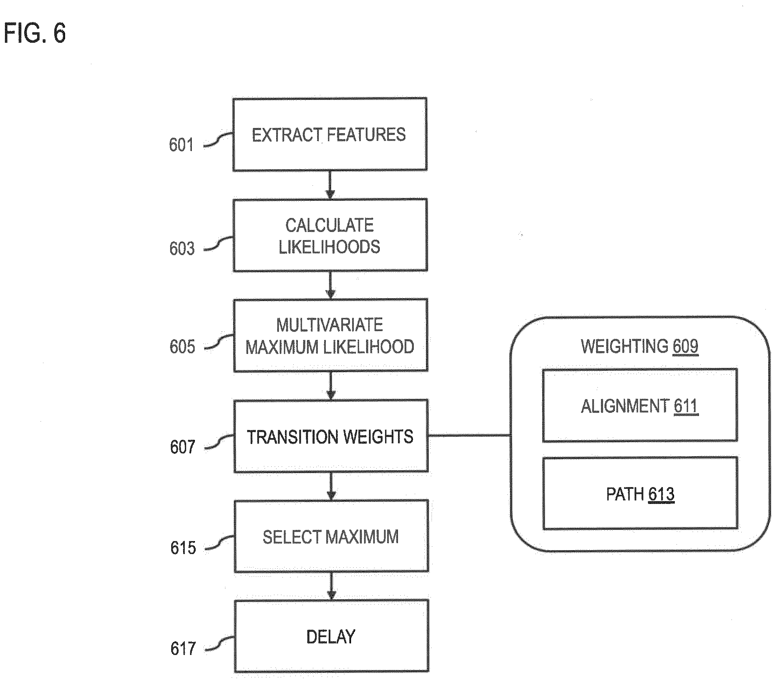

FIG. 6 is a block diagram of an example motion state detection process using a multivariate maximum likelihood algorithm, according to example embodiment(s). At block 601, the motion module 203 extracts features (e.g., feature vectors) from the collected sensor data of interest according the feature extraction embodiments described above. At block 603, the motion module 203 computes log-likelihood estimates of the detection features. By way of example, the motion detection module 203 can utilize pre-computed mean state vectors and accompanying covariance matrices. At block 605, the motion module 203 initiates the multivariate maximum likelihood algorithm, e.g., by determining transition weights at block 607.

In one embodiment, the weighting 609 is based on alignment costs 611 and path costs. For example, the motion module 203 applies alignment costs 611 by computing negative log-likelihood score:

$$-\log g(x_1...x_N, q_1...q_N \mid mOdel) =$$

$$\left[\sum_{i=1}^{N} -\log t(q_i \mid q_{i-1}) - \log g(x_i \mid q_i)\right] - \log t(q_{N+1} \mid q_N).$$

In addition, the motion module 203 takes into account the previous state candidates to decide whether current state path should be changed (e.g., the path costs 613). The motion module 203, for instance, computes different path variations for each state at every epoch (e.g., data window).

Maximum likelihood classification usually assumes multivariate normal (Gaussian) models. For a set of $M$ n-dimensional objects, $(x1,.... xM)$ where $xi = (x1,1,....x1,n)T$, the Gaussian probability density function (PDF) is defined to be:

Multivariate normal PDF

$$g_{[m,C]} = \frac{1}{(2\pi)^{n/2} + |C|^{1/2}} \exp\left\{-0.5 \cdot (x-m)^T C^{-1} (x-m)\right\},$$

Log-multivariate PDF

$$\log g_{[m,C]} = -0.5 \cdot (n \cdot \log(2\pi) + |C|) - 0.5 \cdot (x-m)^T C^{-1} (x-m),$$

where the vector of means is given by

$$m = \frac{1}{n} \sum_n x_n$$

and the covariance matrix is given by

$$C = \frac{1}{(M-1)} \sum_{i=1}^{M} (x_i - m)(x_i - m)^T$$

The matrix C is positive semi-definite and symmetric by construction. The terms

$$\frac{1}{(2\pi)^{n/2} + |C|^{1/2}},$$

and C-1 can be computed offline to select the most probably motion state based on the maximum likelihood (at block 615).

At block 617, the motion module 203 can optionally apply an activation delay, which varies depending on the motion state. In this way, the motion module 203 can determine a delay value of the maximum likelihood classification algorithm based on the determined motion state. In one embodiment, the delay can be implemented to provide hysteresis like behavior to avoid unnecessary state changes.

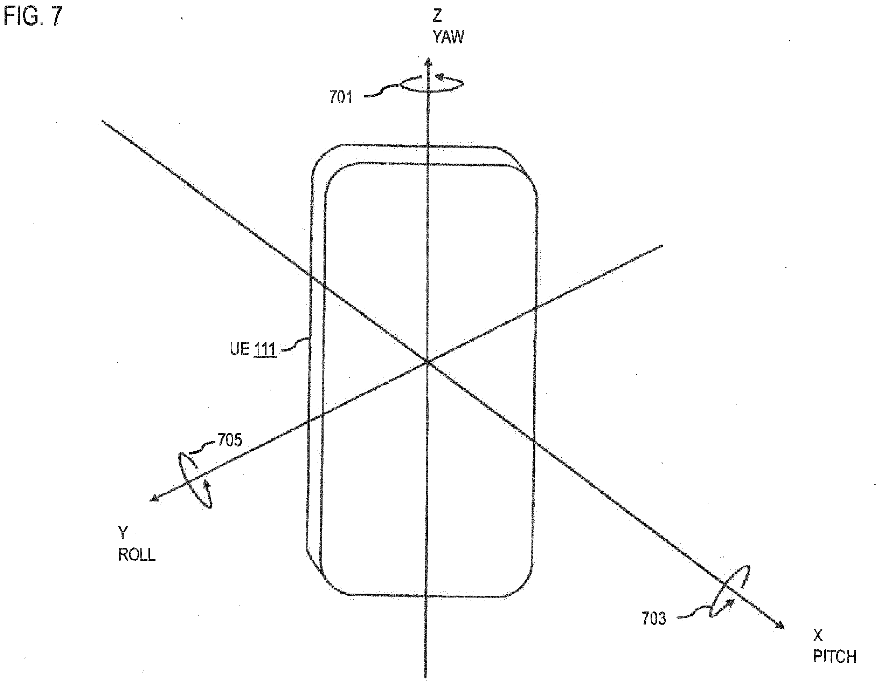

In one embodiment, the orientation module 205 can estimate the pose of the device based on the sensor data collected from an accelerometer. In this example, the device pose or orientation can be estimated using accelerometer derived pose. The orientation calculation, for instance, can focus on reference pose of the device (e.g., a portrait or landscape mode) and estimate the yaw, pitch, and roll accordingly with respect to that general pose assumption. FIG. 7 is a diagram of a device orientation in a three-dimensional space, according to embodiment(s). In the example of FIG. 7, the UE 111 is oriented in an upright arid portrait orientation aligning with the respective x, y, and z axes. As shown, yaw 701 is a rotation along the z axis, pitch 703 is a rotation along the x axis, and roll 705 is a rotation along the y axis. The orientation can be described as yaw, pitch, and roll angles of rotating the UE 111 from a reference placement (e.g., an upright portrait placement) to its current placement. Further, the orientation can be represented by rotation matrices or quaternions, which are mathematically equivalent to Euler angles. With the camera location and orientation, one can define the camera movement with six degrees of freedom (6 DoF) in a coordinate system.

In one embodiment, the orientation module 205 can detect sweet spot region which can provide VPS results with the minimum uncertainty. For example, this sweet spot region can be based on default values (e.g., +/-10 degree tilt or misalignment) or an empirically determined from data. In some embodiment, the orientation module 205 can perform uncertainty weighting based on the misalignment angle of the imaging device.

In one embodiment, the angle values (e.g., yaw, pitch, and roll) of the orientation can be calculated from the pose quaternion. Example pseudocode illustrating this calculation is provided in Table 1 below.

**Table 1**

```
% computes quaternion from acceleration measurement
u = vectNormalize(u);
% local gravity vector - unit vector
v = [0 0 1]';
% compute rotation axis
rotv = vectCross(u, v);
rotv = vectNormalize(rotv);
% rotation angle
angr = acos(vectDot(u, v))/2.0;
% create quaternion
q = qtSet(cos(angr),...
                              rotv(1)*sin(angr),...
                              rotv(2)*sin(angr), ...
                              rotv(3)*sin(angr));
qtNormalize(q);
```

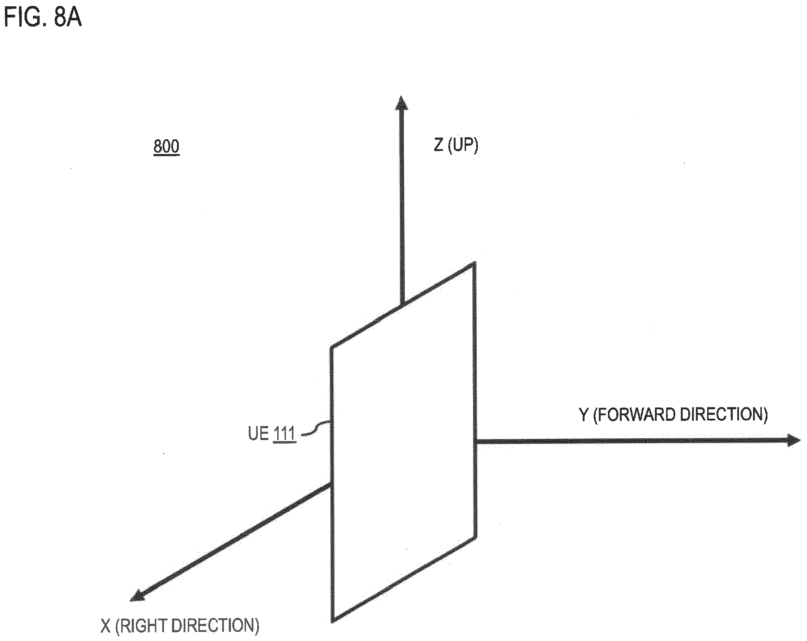

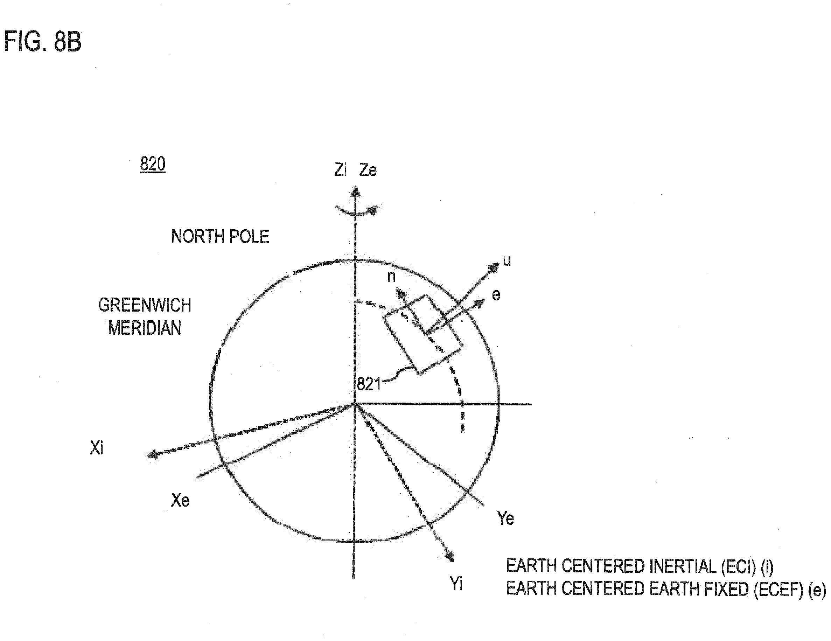

In one embodiment, the orientation angle values depend on the pose axis definition and it is assumed to follow a standardized coordinate frame. FIGs. 8A and 8B are diagrams of example coordinate frames for detecting a device pose, according to example embodiment(s). FIG. 8A illustrates a body coordinate frame 800. In this example, the body frame 800 is a right-handed orthogonal frame fixed to sensor input axes. For example, the z axis runs in the up and down directions from the perspective of a UE 111 in an upright portrait orientation, the y axis runs in the forward and backward directions from the UE 111, and the x axis runs from the left and right directions from the UE 111. In one embodiment, sensor data is measured in this body frame 800.

FIG. 8B illustrates a locally level frame 820. As shown, the locally level frame 820's z-axis is parallel to the upward vertical of the Earth's surface at the reference location, x and y axes complete an ENU frame 821 with E corresponding to an x-axis that points towards East, N corresponding to a y axis that points towards North, and U corresponding to a z axis that points up from the surface of the Earth.

Accordingly, based on these coordinate frames or equivalent frames, the orientation module 205 determines or selects a body coordinate frame based on the sensor data (e.g., relative to the position of the imaging device as shown in FIG. 8A), and also determines or selects a locally level coordinate frame that, for instance, is parallel to an upward vertical from the Earth's surface at a reference location (e.g., as shown in FIG. 8B). The device pose or orientation is then derived based on the body coordinate frame and the locally level coordinate frame.

Table 2 below illustrates example pseudocode for orientation angle value derivation based on selected coordinate frames:

**Table 2**

```
% create 3x3 rotation matrix
m = [q(1)^2+q(2)^2-q(3)^2-q(4)^2      2*(q(2)*q(3)-q(1)*q(4))      2*(q(2)*q(4)+q(1)*q(3));
            2*(q(2)*q(3)+q(1)*q(4))      q(1)^2-q(2)^2+q(3)^2-q(4)^2      2*(q(3)*q(4)-q(1)*q(2));
            2*(q(2)*q(4)-q(1)*q(3))      2*(q(3)*q(4)+q(1)*q(2))      q(1)^2-q(2)^2-q(3)^2+q(4)^2];
% pitch
            e(2) = asin(-constrain(m(3,1), -1, 1));
            if abs(m(3,1))<0.9999999
            % roll
            e(1) = atan2(m(3,2), m(3,3));
            % yaw
            e(3) = atan2(m(2,1), m(1,1));
else
            % roll
            e(1) = 0;
            % yaw
            e(3) = atan2(-m(1,2), m(2,2));
```

(continued)

| end |
| --- |

In step 305, after processing the sensor data to determine the motion state, motion, gesture, and/or pose according to the embodiments described above, the motion module 203 determines if the determined motion, gesture, and/or pose meet criteria for initiating the capture of an image sequence for a VPS request. In one embodiment, the criteria can include a range of orientation/pose angle values that are expected to result in images that can be used for VPS requests. For example, the criteria can be based on a reference position for the image capturing device (e.g., a portrait or landscape position that is aligned upright with respect to the locally level coordinate frame) with a range of acceptable angular variances (e.g., with respect to yaw, pitch, and/or roll) from the reference position. In another example, the detection of specific gestures can be part of the criteria such as detecting that a device has been moved from a waist level to eye level, has been brought up from a holding position to a viewing position, or even that an associated application (e.g., an AR application 121) that requests visual positioning has been activated and is in use.

In one embodiment, the criteria can also include whether the motion state will result in producing clear images (e.g., with less than a maximum level of blur) and/or a sequence of images with sufficient spatial separation between images to processing essentially duplicate images of the scene. Therefore, a determination that the motion, the pose, or a combination thereof meets one or more predetermined criteria indicates that the sequence of the at least two images have a target image quality, have a target level of separation, or combination thereof for the visual positioning service request. If the criteria are not met, the process 300 either ends (e.g., times out if a designated time period for capturing the images is exceeded) or returns to step 301 to continue monitoring and evaluating the sensor data until the device's motion, gesture, and/or pose meet certain criteria.

On the other hand, in step 307, the capture module 209 initiates an automatic capture of a sequence of at least two images by a camera sensor of the device based on determining that the motion, the pose, or a combination thereof meets one or more predetermined criteria. The capture module 209, for instance, can trigger the camera sensor of the device (e.g., the UE 111) to capture a predetermined number of images as a set frequency.

In one embodiment, as the image sequence is being captured or at the end of the image capture sequence, the capture module 209 can process one or more images of the sequence of at least two images to detect an image blur level. If the image blur level is above a threshold value, the capture module 209 can initiate a recapture of the one or more images based on the image blur level. If the recapture images improve with respect to blur, they can be used in place of the corresponding blurry image to generate a VPS request.

It is contemplated that the capture module 209 can use any means for detecting the blue level of the images and for specifying a corresponding blur threshold. For example, in one embodiment, the image blur level is detected based on a Laplacian variation calculation that takes a grayscale version of the captured image and convolves it with the following 3x3 kernel:

$$\begin{bmatrix} 0 & 1 & 0 \\ 0 & -4 & 1 \\ 0 & 1 & 0 \end{bmatrix}$$

The Laplacian calculation pinpoints regions of an image containing rapid intensity changes. It is assumed that if an image contains high variance, then there is a wide spread of responses, both edge-like and non-edge like, representative of a normal, in-focus image. If such a spread of responses from the convolution of the image using the kernel does not occur (e.g., variance below a threshold level), then the image can be classified as blurry, e.g., with the variance being inversely related to the level of blurriness.

An example, MATLAB implementation of the Laplacian calculation is illustrated in Table 3 below.

**Table 3**

```
LAP = [0 1 0; 0 -4 1; 0 1 0];
ILAP = convX(image,LAP);
score = var2(ILAP);
if score < limitValue
% blurry image
end
```

In one embodiment, the threshold value for blurriness is dependent on the usage and domain. For example, in some cases, the visual positioning algorithm may tolerate some amount of blurriness in the images. In this case, the capture module 209 can drop the blurriness detection level to quite a low value. The threshold value, for instance, can be determined empirically or set by default for a given use-case. In one example embodiment, a minimum level of blurriness can be set to protect the privacy of people, objects, or other features that may be visible in the captured images. This minimum level of blurriness can be set so that the people, objects, features, etc. visible in an image can be obscured to a target level and below a maximum amount of blurriness that can be tolerated by the VPS 105. "Tolerate", for instance, refers to a level of blurriness in an image that can still produce visual positioning results within target levels of accuracy or confidence.

In step 309, the output module 211 provides the resulting sequence of least two images, one or more features extracted from the sequence of the least two images, or a combination thereof as an output to generate a visual positioning service request. In some embodiments, in addition to or instead of providing the raw images, the output module 211 can extract one or more features from the images, and then provide the features for VPS requests. For example, the output module 211 can perform a machine learning-based image segmentation or equivalent on the sequence of at least two images. The one or more features extracted from the sequence of the at least two images are based on the machine learning-based image segmentation. In other words, image segmentation results can be used in place of the raw images for VPS requests.

In one embodiment, the VPS 105 implements a Representational State Transfer Application Programming Interface (REST API) as a cloud service. By way of example and not as limitation, the API requests includes header data including user authentication via, e.g., and access token and the metadata payload. The payload content can be provided according to any format such as, but not limited, to protobuf message definition or equivalent.

The payload includes, for instance, preprocessed image data and associated device pose (e.g., orientation and translation) information. The image data could be raw pixel data or extracted features (signatures) or detected objects in the image frame or any other information extracted from the image frame.

In one embodiment, the visual positioning service request further includes environmental data, one or more positioning search constraints, or a combination thereof. For example, the request payload can also include constraints for the search region or area such as user location information or area of interest defined in global coordinates or heading angle range. The constraints can be based on additional input data such as, but not limited to, Cellular Base Station/Network Data (e.g., identifying the network cell where the image device is, WiFi environment, last Global Navigation Satellite System (GNSS) fix, point of interest (POI) check-in (e.g., via a social network application or other equivalent check-in service), scanned QR code indicating a location of the image capturing device, explicit user input (e.g., input indicating "I am at POI A"), etc. The payload could also include environmental data like barometer measurement, temperature, air quality among other things.

In one embodiment, the header and payload data are then included into a HTTP request or equivalent to form a full message envelope. The VPS request payload is then provided to the VPS 105 for processing.

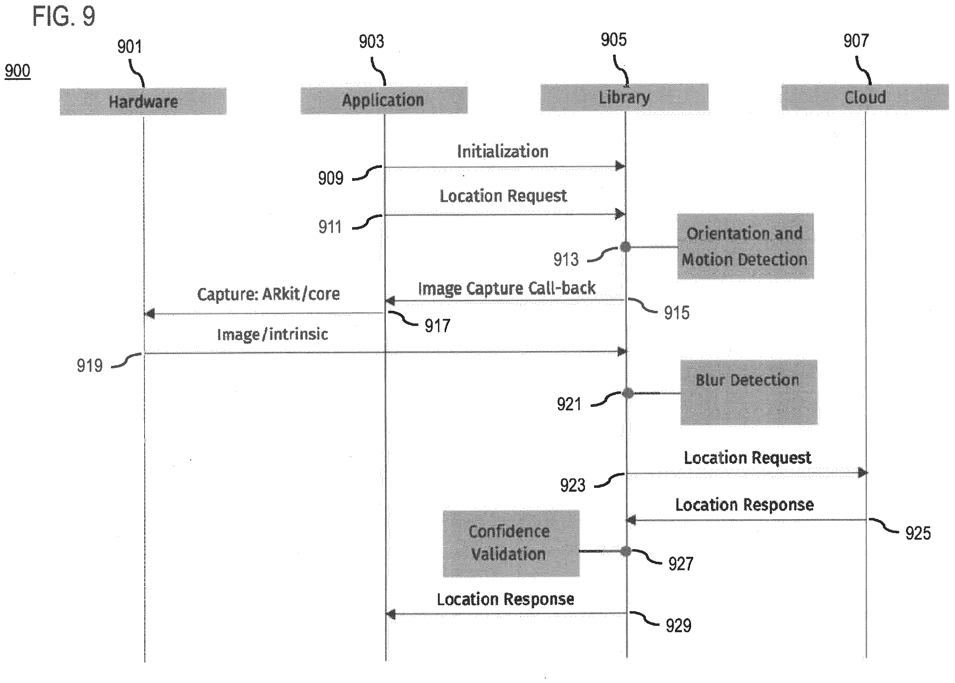

FIG. 9 is a ladder diagram 900 of a VPS request sequence, according to example embodiment(s). The components represented in the ladder diagram 900 are hardware 901 (e.g., imaging related sensor hardware of an imaging device such as the UE 111), application 903 (e.g., an AR, mapping, navigation, etc. application 121 executing on the UE 111 that may use visual positioning), a library 905 (e.g., used by the application 903 to access functions of the VPS 105); and cloud 907 (e.g., REST API of the VPS 105 for providing visual positioning data 107).

At process 909, the application 903 sends an initialization message to the library 905 to begin the VPS request sequence. At process 911, the application 903 follows the initialization message with a location request message (e.g., indicating that the application 903 would like to be obtain a visual positioning derived location). In response, at process 913, the library initiates an orientation and motion detection process (e.g., such as described with respect to the various embodiments of process 300 of FIG. 3 above) and sends an image capture call-back message to the application 903 at process 915.

The image capture call-back process 915 indicates to the application 903 that it should initiate collecting and monitoring its sensor data (e.g., IMU, accelerometer, gyroscope, etc. data) to determine when to initiate capture of an image sequence for visual positioning. In one embodiment, at process 917, the application 903 sends a capture message to the hardware 901 to initiate corresponding operating system components (e.g., ARKit/ARcore) to begin orientation and motion detection to determine when to initiate capture of the request image sequence. At process 919, when motion, orientation, and/or gesture criteria are met according to the embodiments described herein, the hardware 901 captures the image sequence and sends the image sequence and related intrinsic data (e.g., orientation frame, image features, etc.) to the library 905. The library 905 receives and performs blur detection on the images at process 921.

At process 923, if the images are not blurry and no recapturing of the images is needed, the library 905 transmits a VPS location request (e.g., comprising the request payload described above) to the cloud 907 for processing. In response, the cloud 907 determines a location based on the received request payload (e.g., matching features or objects detected in the image frames against the corresponding features mapped in the geographic database 103). At process 925, the cloud 907 sends a location response message comprising the requested VPS location and/or other related data (e.g., the response payload is described in more detail further below) to the library 905. The library 905 performs a confidence validation of the location response (e.g., weighting the location response against the level of misalignment of the hardware 901 when the image was captured) at process 927. On passing the confidence validation, the library relays the location response to the requesting application 903 at process 929.

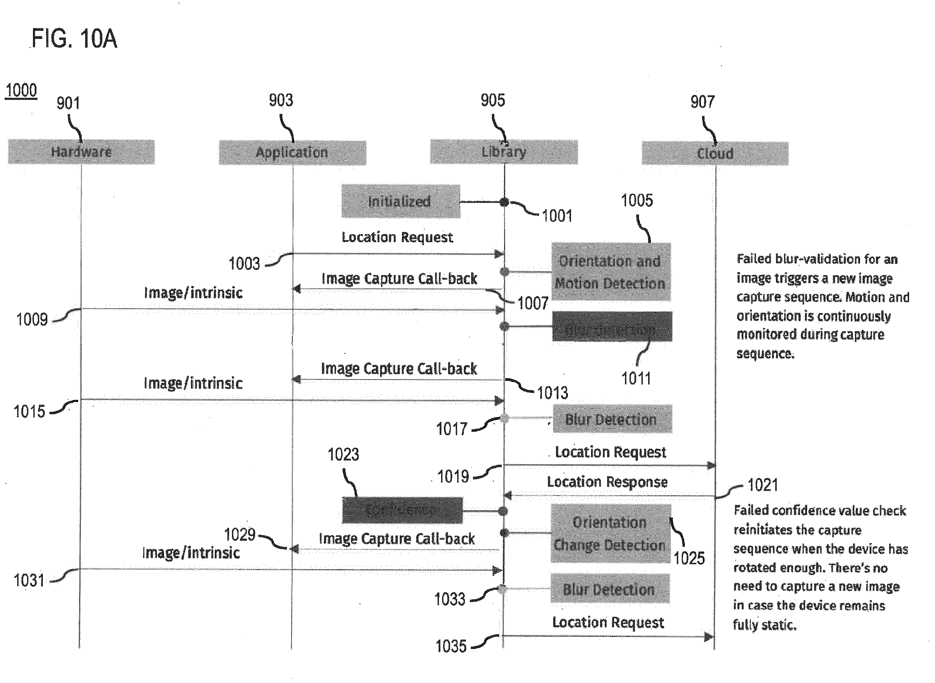

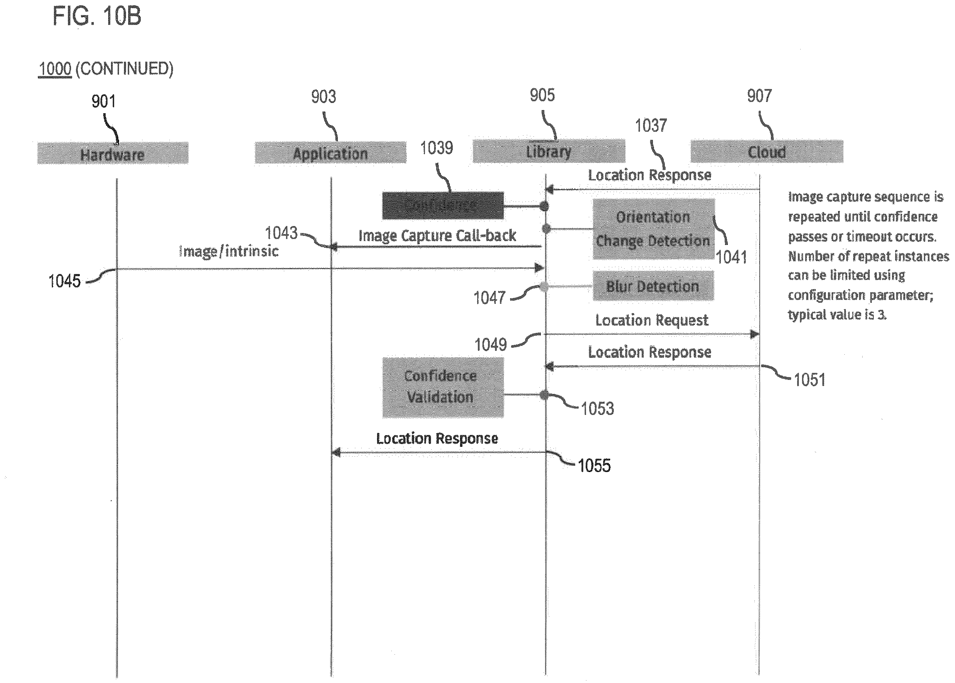

FIGs. 10A and 10B are a ladder diagram 1000 of a VPS request sequence with image capturing failures, according to example embodiment(s). The ladder diagram 1000 continues from FIG. 10A to 10B in sequence. The components represented in the ladder diagram 1000 are the same as illustrated in FIG. 9 and include hardware 901 (e.g., imaging related sensor hardware of a imaging device such as the LTE 111), application 903 (e.g., an AR, mapping, navigation, etc. application 121 executing on the UE 111 that may use visual positioning), a library 905 (e.g., used by the application 903 to access functions of the VPS 105); and cloud 907 (e.g., REST API of the VPS 105 for providing visual positioning data 107).

In one embodiment, VPS reports mean pose for a sequence of images. This raises the issue of aligning the results in the time domain, how to report the time instance for the location fix, and how to calculate it. These issues are illustrated in the ladder diagram 1000.

At process 1001, the library is initialized. The application 903 then sends a location request message to the library at process 1003. At process 1005, the library initiates orientation and motion detection and transmits an image capture call-back message to the application 903 (at process 1007). In response, at process 1009, the hardware 901 initiates the capture on an image sequence according to the embodiments described herein and transmit the image and/or related intrinsic data to the library 905. At process 1011, the library 905's blur detection determines that the images provided by the hardware fails.

In one embodiment, a failed blur-validation for an image triggers a new image capture sequence. For example, a new image capture call-back message is transmitted from the library 905 to the application 903 (at process 1013). The hardware 901 captures a new image and transmits the new image and/or related intrinsic data back to the library 905 (at process 1015) for another blur detection (at process 1017). Motion and orientation of the hardware 901 are continuously monitored during this capture and recapture sequence.

This time, the blur detection is successful, and at process 1019, the library forwards the images to the cloud 907 in a location request message. At process 1021, the location response is returned from the cloud 907 to the library 905. The library 905 performs a confidence check on the location response results from the cloud 907 and determines that the confidence value check has failed (e.g., because the orientation of the hardware 901 produced a lower confidence result after weighting for misalignment). The failed confidence value check reinitiates the capture when the device has rotated enough to potentially increase the confidence value of any new images.

Accordingly, at process 1025, the library initiates an orientation change detection to perform this monitoring. There is no need to capture a new image in case the device remains fully static. On the other hand, once an orientation change above a threshold level occurs, the capture sequence is reinitiated by sending an image capture call-back message 1029 to the application 903. In response, the hardware 901 captures and transmits new image(s) and/or related intrinsic data to the library 905 at process 1031. At process 1033, the library performs a blur detection on the new image(s). After passing blur detection, the library transmits the new image as payload in a location request at process 1035.

Continuing to FIG. 10B, at process 1037, the cloud 907 returns a location response to the library 905. At process 1039, the library 905 performs another confidence value check. Again, the confidence value check fails. In one embodiment, the image capture is repeated until confidence passes or a timeout occurs. The number of repeat instances can be limited using a configuration parameter. For example, the number repeat sequences can be capped at three or any other designated number. Accordingly, at process 1041, the library 905 performs another originate change detection to wait for when the device's orientation has changed beyond a threshold value.

Once the orientation change has been detected, the library 905 initiates another round of image capture by transmitting an image capture call-back message to the application 903 (at process 1043). At process 1045, the hardware 901 new image(s) and transmits the images and/or related intrinsic data to the library 905. The library 905 performs a blur detection on the new images at process 1047. On a passing blur detection, the library 905 transmits the new images in a location request to the cloud 907 at process 1049. The cloud 907 generates a location response and transmits the location response to the library 905 at process 1051. At process 1053, the library performs another confidence validation of the location response. This time, the confidence validation is successful, and the library 905 relays the location response message to the application 903.

In one embodiment, the location response message is formed similarly to the request message including HTTP header and protobuf defined payload content. The payload data content includes but is not limited to following:

- Location: latitude, longitude, and altitude;
- Orientation: quaternion with respect to true North;
- Uncertainty of location and orientation information;

- Confidence figure for the estimation quality;
- Floor level information including reference pressure for barometric altimeter for improved accuracy;
- Venue information like visual positioning availability areas; and/or
- Feature (signature) extraction parametrization, for instance, to allow for runtime adaptation of the feature extraction algorithm.

Returning to FIG. 1, as shown, the system 100 includes the imaging system 119 for providing capturing a sequence of images for VPS requests according to the various embodiments described herein. In one embodiment, the imaging system 119 has connectivity over the communication network 127 to the mapping platform 101, services platform 129 that provides one or more services 131, one or more content providers 133, and/or any other component that can use visual positioning data 107 generated according to the embodiments described herein. By way of example, the services 131 may be third party services and include but is not limited to mapping services, navigation services, travel planning services, notification services, social networking services, content (e.g., audio, video, images, etc.) provisioning services, application services, storage services, contextual information determination services, location based services, information based services (e.g., weather, news, etc.), etc. In one embodiment, the services 131 uses the visual positioning data 107 to provide services 131 such as navigation, mapping, other location-based services, etc. to the vehicles 113, UEs 111, and/or applications 121 executing on the UEs 111.

In one embodiment, the imaging system 119 may be a platform with multiple interconnected components. The imaging system 119 may include multiple servers, intelligent networking devices, computing devices, components, and corresponding software for capturing image sequences for VPS requests according to the various embodiments described herein. In addition, it is noted that the imaging system 119 may be a separate entity of the system 100, a part of the mapping platform 101, one or more services 131, a part of the services platform 129, or included within components of the vehicles 113 and/or UEs 111.

In one embodiment, content providers 133 may provide content or data (e.g., including geographic data, etc.) to the geographic database 103, imaging system 119, the mapping platform 101, the services platform 129, the services 131, the vehicles 113, the UEs 111, and/or the applications 121 executing on the UEs 111. The content provided may be any type of content, such as image data, VPS data, machine learning models, map embeddings, map content, textual content, audio content, video content, image content, etc. In one embodiment, the content providers 133 may provide content that may aid in capturing images for VPS requests according to the various embodiments described herein. In one embodiment, the content providers 133 may also store content associated with the imaging system 119, geographic database 103, mapping platform 101, services platform 129, services 131, and/or any other component of the system 100. In another embodiment, the content providers 133 may manage access to a central repository of data, and offer a consistent, standard interface to data, such as a repository of the geographic database 103.

In one embodiment, the vehicles 113 and/or UEs 111 may execute software applications 121 to capture images sequences for VPS requests according the embodiments described herein. By way of example, the applications 121 may also be any type of application that is executable on the vehicles 113 and/or UEs 111, such as mapping applications, location-based service applications, navigation applications, device control applications, content provisioning services, camera/imaging application, media player applications, social networking applications, calendar applications, and the like. In one embodiment, the imaging system 119 may act as a client for the VPS 105 and/or mapping platform 101 and perform one or more functions associated with capturing image sequence for VPS requests alone or in combination with the mapping platform 101/VPS 105.

By way of example, the vehicles 113 and/or UEs 111 is or can include any type of embedded system, mobile terminal, fixed terminal, or portable terminal including a built-in navigation system, a personal navigation device, mobile handset, station, unit, device, multimedia computer, multimedia tablet, Internet node, communicator, desktop computer, laptop computer, notebook computer, netbook computer, tablet computer, personal communication system (PCS) device, personal digital assistants (PDAs), audio/video player, digital camera/camcorder, positioning device, fitness device, television receiver, radio broadcast receiver, electronic book device, game device, or any combination thereof, including the accessories and peripherals of these devices, or any combination thereof. It is also contemplated that the vehicles 113 and/or UEs 111 can support any type of interface to the user (such as "wearable" circuitry, etc.). In one embodiment, the imaging system 119 may be associated with or be a component of a vehicle or any other device.

In one embodiment, the vehicles 113 and/or UEs 111 are configured with various sensors for generating or collecting environmental image data, related geographic data, etc. In one embodiment, the sensed data represent sensor data associated with a geographic location or coordinates at which the sensor data was collected, and the polyline or polygonal representations of detected objects of interest derived therefrom. By way of example, the sensors may include a global positioning sensor for gathering location data (e.g., GPS), IMUs, a network detection sensor for detecting wireless signals or receivers for different short-range communications (e.g., Bluetooth, Wi-Fi, Li-Fi, near field communication (NFC) etc.), temporal information sensors, a camera/imaging sensor for gathering image data (e.g., the camera sensors may automatically capture road sign information, images of road obstructions, etc. for analysis), an audio recorder for gathering audio data, velocity sensors mounted on steering wheels of the vehicles, switch sensors for determining whether one or more vehicle switches are engaged, and the like.

Other examples of sensors of the vehicles 113 and/or UEs 111 may include light sensors, orientation sensors augmented with height sensors and acceleration sensor, tilt sensors to detect the degree of incline or decline (e.g., slope) along a path of travel, moisture sensors, pressure sensors, etc. In a further example embodiment, sensors about the perimeter of the vehicles 113 and/or UEs 111 may detect the relative distance of the device or vehicle from a lane or roadway, the presence of other vehicles, pedestrians, traffic lights, potholes and any other objects, or a combination thereof. In one scenario, the sensors may detect weather data, traffic information, or a combination thereof. In one embodiment, the vehicles 113 and/or UEs 111 may include GPS or other satellite-based receivers to obtain geographic coordinates from positioning satellites for determining current location and time. Further, the location can be determined by visual odometry, triangulation systems such as A-GPS, Cell of Origin, or other location extrapolation technologies.

In one embodiment, the communication network 127 of system 100 includes one or more networks such as a data network, a wireless network, a telephony network, or any combination thereof. It is contemplated that the data network may be any local area network (LAN), metropolitan area network (MAN), wide area network (WAN), a public data network (e.g., the Internet), short range wireless network, or any other suitable packet-switched network, such as a commercially owned, proprietary packet-switched network, e.g., a proprietary cable or fiber-optic network, and the like, or any combination thereof. In addition, the wireless network may be, for example, a cellular network and may employ various technologies including enhanced data rates for global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., worldwide interoperability for microwave access (WiMAX), Long Term Evolution (LTE) networks, 5G New Radio networks, code division multiple access (CDMA), wideband code division multiple access (WCDMA), wireless fidelity (Wi-Fi), wireless LAN (WLAN), Bluetooth®, Internet Protocol (IP) data casting, satellite, mobile ad-hoc network (MANET), and the like, or any combination thereof.

By way of example, the imaging system 119, VPS 105, mapping platform 101, services platform 129, services 131, vehicles 113 and/or UEs 111, and/or content providers 133 communicate with each other and other components of the system 100 using well known, new or still developing protocols. In this context, a protocol includes a set of rules defining how the network nodes within the communication network 127 interact with each other based on information sent over the communication links. The protocols are effective at different layers of operation within each node, from generating and receiving physical signals of various types, to selecting a link for transferring those signals, to the format of information indicated by those signals, to identifying which software application executing on a computer system sends or receives the information. The conceptually different layers of protocols for exchanging information over a network are described in the Open Systems Interconnection (OSI) Reference Model.

Communications between the network nodes are typically effected by exchanging discrete packets of data. Each packet typically comprises (1) header information associated with a particular protocol, and (2) payload information that follows the header information and contains information that may be processed independently of that particular protocol. In some protocols, the packet includes (3) trailer information following the payload and indicating the end of the payload information. The header includes information such as the source of the packet, its destination, the length of the payload, and other properties used by the protocol. Often, the data in the payload for the particular protocol includes a header and payload for a different protocol associated with a different, higher layer of the OSI Reference Model. The header for a particular protocol typically indicates a type for the next protocol contained in its payload. The higher layer protocol is said to be encapsulated in the lower layer protocol. The headers included in a packet traversing multiple heterogeneous networks, such as the Internet, typically include a physical (layer 1) header, a data-link (layer 2) header, an internetwork (layer 3) header and a transport (layer 4) header, and various application (layer 5, layer 6 and layer 7) headers as defined by the OSI Reference Model.

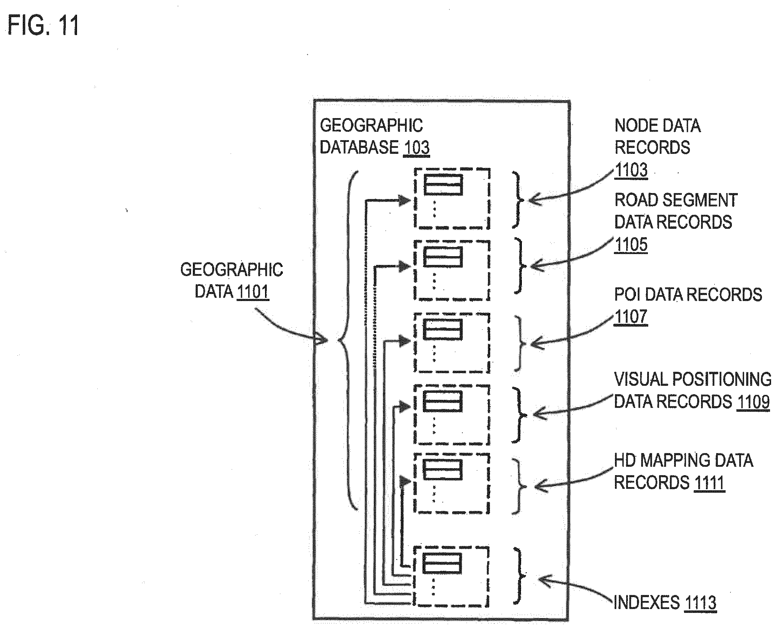

FIG. 11 is a diagram of a geographic database 103, according to one embodiment. In one embodiment, the geographic database 103 includes geographic data 1101 used for (or configured to be compiled to be used for) mapping and/or navigation-related services, such as for providing map embedding analytics according to the embodiments described herein. For example, the map data records stored herein can be used to determine the semantic relationships among the map features, attributes, categories, etc. represented in the geographic data 1101. In one embodiment, the geographic database 103 include high definition (HD) mapping data that provide centimeter-level or better accuracy of map features. For example, the geographic database 103 can be based on Light Detection and Ranging (LiDAR) or equivalent technology to collect billions of 3D points and model geographic environments. For example, in indoor environments, the HD mapping data can include, but is not limited to 3D mesh data representing detected indoor surfaces or features such as, but not limited, to floors, walls, doors/doorways, ceilings, windows, furniture, stairwells, elevators, and/or the like. In an outdoor environment, models of road surfaces and other map features down to the number lanes and their widths can be created. In one embodiment, the HD mapping data (e.g., HD data records 1111) capture and store details such as the slope and curvature of the road, lane markings, roadside objects such as signposts, including what the signage denotes. By way of example, the HD mapping data enable highly automated vehicles to precisely localize themselves on the road.

In one embodiment, the geographic database 103 can also store imagery taken by a surveying device or equivalent. The imagery can be used for indoor positioning, for instance, by comparing features visible in the stored or reference imagery (e.g., imagery map-matched to a location) against imagery captured by user devices for visual positioning. By way of example, imagery refers to multiple pictures/videos taken at a location via a camera or camera array (e.g., for generating 360° images, stereoscopic images, etc.).

In one embodiment, geographic features (e.g., two-dimensional or three-dimensional features) are represented using polylines and/or polygons (e.g., two-dimensional features) or polygon extrusions (e.g., three-dimensional features). In one embodiment, these polylines/polygons can also represent ground truth or reference features or objects (e.g., signs, road markings, lane lines, landmarks, etc.) used for visual odometry. For example, the polylines or polygons can correspond to the boundaries or edges of the respective geographic features. In the case of a building, a two-dimensional polygon can be used to represent a footprint of the building, and a three-dimensional polygon extrusion can be used to represent the three-dimensional surfaces of the building. Accordingly, the terms polygons and polygon extrusions as used herein can be used interchangeably.

In one embodiment, the following terminology applies to the representation of geographic features in the geographic database 103.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes (e.g., used to alter a shape of the link without defining new nodes).

"Oriented link" - A link that has a starting node (referred to as the "reference node") and an ending node (referred to as the "non reference node").

"Simple polygon" - An interior area of an outer boundary formed by a string of oriented links that begins and ends in one node. In one embodiment, a simple polygon does not cross itself.

"Polygon" - An area bounded by an outer boundary and none or at least one interior boundary (e.g., a hole or island). In one embodiment, a polygon is constructed from one outer simple polygon and none or at least one inner simple polygon. A polygon is simple if it just consists of one simple polygon, or complex if it has at least one inner simple polygon.

In one embodiment, the geographic database 103 follows certain conventions. For example, links do not cross themselves and do not cross each other except at a node. Also, there are no duplicated shape points, nodes, or links. Two links that connect each other have a common node. In the geographic database 103, overlapping geographic features are represented by overlapping polygons. When polygons overlap, the boundary of one polygon crosses the boundary of the other polygon. In the geographic database 103, the location at which the boundary of one polygon intersects they boundary of another polygon is represented by a node. In one embodiment, a node may be used to represent other locations along the boundary of a polygon than a location at which the boundary of the polygon intersects the boundary of another polygon. In one embodiment, a shape point is not used to represent a point at which the boundary of a polygon intersects the boundary of another polygon.

As shown, the geographic database 103 includes node data records 1103, road segment or link data records 1105, POI data records 1107, visual positioning data records 1109, HD mapping data records 1111, and indexes 1113, for example. More, fewer, or different data records can be provided. In one embodiment, additional data records (not shown) can include cartographic ("carto") data records, routing data, and maneuver data. In one embodiment, the indexes 1113 may improve the speed of data retrieval operations in the geographic database 103. In one embodiment, the indexes 1113 may be used to quickly locate data without having to search every row in the geographic database 103 every time it is accessed. For example, in one embodiment, the indexes 1113 can be a spatial index of the polygon points associated with stored feature polygons.

In exemplary embodiments, the road segment data records 1105 are links or segments representing roads, streets, or paths, as can be used in the calculated route or recorded route information for determination of one or more personalized routes. The node data records 1103 are end points (for example, representing intersections or an end of a road) corresponding to the respective links or segments of the road segment data records 1105. The road link data records 1105 and the node data records 1103 represent a road network, such as used by vehicles, cars, and/or other entities. Alternatively, the geographic database 103 can contain path segment and node data records or other data that represent pedestrian paths or areas in addition to or instead of the vehicle road record data, for example.

The road/link segments and nodes can be associated with attributes, such as geographic coordinates, street names, address ranges, speed limits, turn restrictions at intersections, and other navigation related attributes, as well as POIs, such as gasoline stations, hotels, restaurants, museums, stadiums, offices, automobile dealerships, auto repair shops, buildings, stores, parks, etc. The geographic database 103 can include data about the POIs and their respective locations in the POI data records 1107. The geographic database 103 can also include data about places, such as cities, towns, or other communities, and other geographic features, such as bodies of water, mountain ranges, etc. Such place or feature data can be part of the POI data records 1107 or can be associated with POIs or POI data records 1107 (such as a data point used for displaying or representing a position of a city).

In one embodiment, the geographic database 103 can also include visual positioning data records 1109 for storing reference imagery, captured image sequences, VPS data, and/or any other related data that is used or generated according to the embodiments described herein. As described above, in an indoor positioning use case, the visual positioning data records 1109 can include reference features (e.g., mapped indoor features such as floors, ceilings, walls, doors/doorways, windows, stairways, edges, etc.) and/or images thereof that have been mapped to corresponding locations or location data records (e.g., have a corresponding recorded location such as within a 3D indoor space using a selected coordinate frame as described with respect to FIGs. 8A and 8B). The mapping and/or imaging of indoor spaces can be performed by surveying devices equipped with cameras and/or other sensors (e.g., LiDAR, radar, etc.) to capture the locations and dimensions of those spaces and the features therein. By way of example, the visual positioning data records 1109 can be associated with one or more of the node records 1103, road segment records 1105, and/or POI data records 1107 to associate the visual positioning data with specific places, POIs, geographic areas, and/or other map features. In this way, the visual positioning data records 1109 can also be associated with the characteristics or metadata of the corresponding records 1103, 1105, and/or 1107. For example, an indoor mapping of features of a POI can be associated with the corresponding POI data record 1107 to inherit the attributes of the POI data record 1107 (e.g., location, POI type, etc.).

In one embodiment, as discussed above, the HD mapping data records 1111 model road surfaces and other map features to centimeter-level or better accuracy. The HD mapping data records 1111 also include ground truth object models that provide the precise object geometry with polylines or polygonal boundaries, as well as rich attributes of the models. These rich attributes include, but are not limited to, object type, object location, lane traversal information, lane types, lane marking types, lane level speed limit information, and/or the like. In one embodiment, the HD mapping data records 1111 are divided into spatial partitions of varying sizes to provide HD mapping data to end user devices with near real-time speed without overloading the available resources of the devices (e.g., computational, memory, bandwidth, etc. resources).

In one embodiment, the HD mapping data records 1111 are created from high-resolution 3D mesh or point-cloud data generated, for instance, from LiDAR-equipped vehicles. The 3D mesh or point-cloud data are processed to create 3D representations of a street or geographic environment at centimeter-level accuracy for storage in the HD mapping data records 1111.

In one embodiment, the HD mapping data records 1111 also include real-time sensor data collected from probe vehicles in the field. The real-time sensor data, for instance, integrates real-time traffic information, weather, and road conditions (e.g., potholes, road friction, road wear, etc.) with highly detailed 3D representations of street and geographic features to provide precise real-time data (e.g., including probe trajectories) also at centimeter-level accuracy. Other sensor data can include vehicle telemetry or operational data such as windshield wiper activation state, braking state, steering angle, accelerator position, and/or the like.

In one embodiment, the geographic database 103 can be maintained by the content provider 133 in association with the services platform 129 (e.g., a map developer). The map developer can collect geographic data to generate and enhance the geographic database 103. There can be different ways used by the map developer to collect data. These ways can include obtaining data from other sources, such as municipalities or respective geographic authorities. In addition, the map developer can employ field personnel to travel by vehicle along roads throughout the geographic region to observe features and/or record information about them, for example. Also, remote sensing, such as aerial or satellite photography, can be used.

The geographic database 103 can be a master geographic database stored in a format that facilitates updating, maintenance, and development. For example, the master geographic database or data in the master geographic database can be in an Oracle spatial format or other format (e.g., capable of accommodating multiple/different map layers), such as for development or production purposes. The Oracle spatial format or development/production database can be compiled into a delivery format, such as a geographic data files (GDF) format. The data in the production and/or delivery formats can be compiled or further compiled to form geographic database products or databases, which can be used in end user navigation devices or systems.

For example, geographic data is compiled (such as into a platform specification format (PSF)) to organize and/or configure the data for performing navigation-related functions and/or services, such as route calculation, route guidance, map display, speed calculation, distance and travel time functions, and other functions, by a navigation device, such as by vehicles 113 and/or UEs 111. The navigation-related functions can correspond to vehicle navigation, pedestrian navigation, or other types of navigation. The compilation to produce the end user databases can be performed by a party or entity separate from the map developer. For example, a customer of the map developer, such as a navigation device developer or other end user device developer, can perform compilation on a received geographic database in a delivery format to produce one or more compiled navigation databases.

The processes described herein for capturing image sequences for VPS requests may be advantageously implemented via software, hardware (e.g., general processor, Digital Signal Processing (DSP) chip, an Application Specific Integrated Circuit (ASIC), Field Programmable Gate Arrays (FPGAs), etc.), firmware or a combination thereof. Such exemplary hardware for performing the described functions is detailed below.

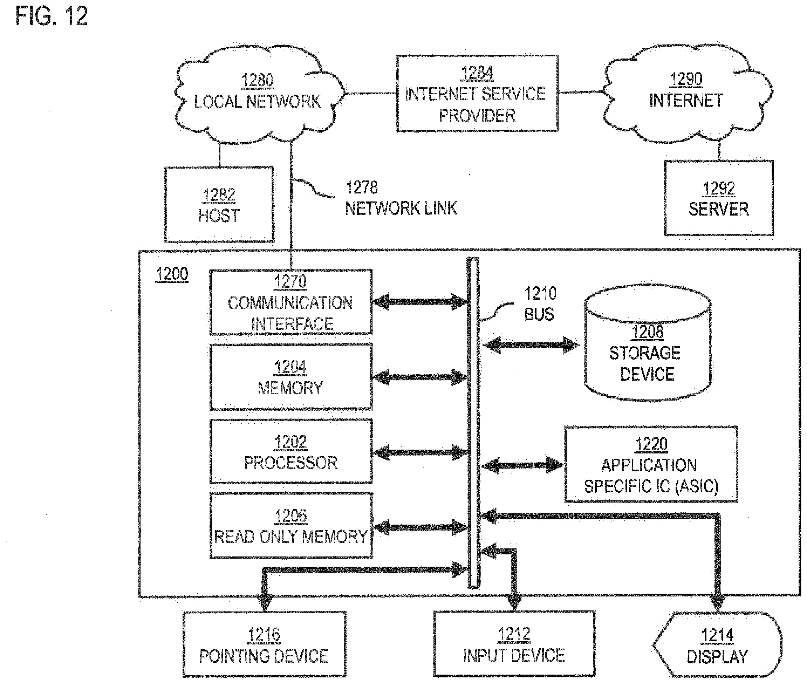

FIG. 12 illustrates a computer system 1200 upon which an embodiment of the invention may be implemented. Computer system 1200 is programmed (e.g., via computer program code or instructions) to capture image sequences for VPS requests as described herein and includes a communication mechanism such as a bus 1210 for passing information between other internal and external components of the computer system 1200. Information (also called data) is represented as a physical expression of a measurable phenomenon, typically electric voltages, but including, in other embodiments, such phenomena as magnetic, electromagnetic, pressure, chemical, biological, molecular, atomic, sub-atomic and quantum interactions. For example, north and south magnetic fields, or a zero and non-zero electric voltage, represent two states (0, 1) of a binary digit (bit). Other phenomena can represent digits of a higher base. A superposition of multiple simultaneous quantum states before measurement represents a quantum bit (qubit). A sequence of one or more digits constitutes digital data that is used to represent a number or code for a character. In some embodiments, information called analog data is represented by a near continuum of measurable values within a particular range.

A bus 1210 includes one or more parallel conductors of information so that information is transferred quickly among devices coupled to the bus 1210. One or more processors 1202 for processing information are coupled with the bus 1210.

A processor 1202 performs a set of operations on information as specified by computer program code related to capturing image sequences for VPS requests. The computer program code is a set of instructions or statements providing instructions for the operation of the processor and/or the computer system to perform specified functions. The code, for example, may be written in a computer programming language that is compiled into a native instruction set of the processor. The code may also be written directly using the native instruction set (e.g., machine language). The set of operations include bringing information in from the bus 1210 and placing information on the bus 1210. The set of operations also typically include comparing two or more units of information, shifting positions of units of information, and combining two or more units of information, such as by addition or multiplication or logical operations like OR, exclusive OR

(XOR), and AND. Each operation of the set of operations that can be performed by the processor is represented to the processor by information called instructions, such as an operation code of one or more digits. A sequence of operations to be executed by the processor 1202, such as a sequence of operation codes, constitute processor instructions, also called computer system instructions or, simply, computer instructions. Processors may be implemented as mechanical, electrical, magnetic, optical, chemical or quantum components, among others, alone or in combination.

Computer system 1200 also includes a memory 1204 coupled to bus 1210. The memory 1204, such as a random access memory (RAM) or other dynamic storage device, stores information including processor instructions for capturing image sequences for VPS requests. Dynamic memory allows information stored therein to be changed by the computer system 1200. RAM allows a unit of information stored at a location called a memory address to be stored and retrieved independently of information at neighboring addresses. The memory 1204 is also used by the processor 1202 to store temporary values during execution of processor instructions. The computer system 1200 also includes a read only memory (ROM) 1206 or other static storage device coupled to the bus 1210 for storing static information, including instructions, that is not changed by the computer system 1200. Some memory is composed of volatile storage that loses the information stored thereon when power is lost. Also coupled to bus 1210 is a non-volatile (persistent) storage device 1208, such as a magnetic disk, optical disk or flash card, for storing information, including instructions, that persists even when the computer system 1200 is turned off or otherwise loses power.

Information, including instructions for capturing image sequences for VPS requests, is provided to the bus 1210 for use by the processor from an external input device 1212, such as a keyboard containing alphanumeric keys operated by a human user, or a sensor. A sensor detects conditions in its vicinity and transforms those detections into physical expression compatible with the measurable phenomenon used to represent information in computer system 1200. Other external devices coupled to bus 1210, used primarily for interacting with humans, include a display device 1214, such as a cathode ray tube (CRT) or a liquid crystal display (LCD), or plasma screen or printer for presenting text or images, and a pointing device 1216, such as a mouse or a trackball or cursor direction keys, or motion sensor, for controlling a position of a small cursor image presented on the display 1214 and issuing commands associated with graphical elements presented on the display 1214. In some embodiments, for example, in embodiments in which the computer system 1200 performs all functions automatically without human input, one or more of external input device 1212, display device 1214 and pointing device 1216 is omitted.

In the illustrated embodiment, special purpose hardware, such as an application specific integrated circuit (ASIC) 1220, is coupled to bus 1210. The special purpose hardware is configured to perform operations not performed by processor 1202 quickly enough for special purposes. Examples of application specific ICs include graphics accelerator cards for generating images for display 1214, cryptographic boards for encrypting and decrypting messages sent over a network, speech recognition, and interfaces to special external devices, such as robotic arms and medical scanning equipment that repeatedly perform some complex sequence of operations that are more efficiently implemented in hardware.

Computer system 1200 also includes one or more instances of a communications interface 1270 coupled to bus 1210. Communication interface 1270 provides a one-way or two-way communication coupling to a variety of external devices that operate with their own processors, such as printers, scanners, and external disks. In general the coupling is with a network link 1278 that is connected to a local network 1280 to which a variety of external devices with their own processors are connected. For example, communication interface 1270 may be a parallel port or a serial port or a universal serial bus (USB) port on a personal computer. In some embodiments, communications interface 1270 is an integrated services digital network (ISDN) card or a digital subscriber line (DSL) card or a telephone modem that provides an information communication connection to a corresponding type of telephone line. In some embodiments, a communication interface 1270 is a cable modem that converts signals on bus 1210 into signals for a communication connection over a coaxial cable or into optical signals for a communication connection over a fiber optic cable. As another example, communications interface 1270 may be a local area network (LAN) card to provide a data communication connection to a compatible LAN, such as Ethernet. Wireless links may also be implemented. For wireless links, the communications interface 1270 sends or receives or both sends and receives electrical, acoustic, or electromagnetic signals, including infrared and optical signals, that carry information streams, such as digital data. For example, in wireless handheld devices, such as mobile telephones like cell phones, the communications interface 1270 includes a radio band electromagnetic transmitter and receiver called a radio transceiver. In certain embodiments, the communications interface 1270 enables connection to the communication network 127 for capturing image sequences for VPS requests.

The term computer-readable medium is used herein to refer to any medium that participates in providing information to processor 1202, including instructions for execution. Such a medium may take many forms, including, but not limited to, non-volatile media, volatile media, and transmission media. Non-volatile media include, for example, optical or magnetic disks, such as storage device 1208. Volatile media include, for example, dynamic memory 1204. Transmission media include, for example, coaxial cables, copper wire, fiber optic cables, and carrier waves that travel through space without wires or cables, such as acoustic waves and electromagnetic waves, including radio, optical and infrared waves. Signals include man-made transient variations in amplitude, frequency, phase, polarization, or other physical properties transmitted through the transmission media. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, an EPROM, a FLASH-EPROM, any other memory chip or cartridge, a carrier wave, or any other medium from which a computer can read.

Network link 1278 typically provides information communication using transmission media through one or more networks to other devices that use or process the information. For example, network link 1278 may provide a connection through local network 1280 to a host computer 1282 or to equipment 1284 operated by an Internet Service Provider (ISP). ISP equipment 1284 in turn provides data communication services through the public, world-wide packet-switching communication network of networks now commonly referred to as the Internet 1290.

A computer called a server host 1292 connected to the Internet hosts a process that provides a service in response to information received over the Internet. For example, server host 1292 hosts a process that provides information representing video data for presentation at display 1214. It is contemplated that the components of system can be deployed in various configurations within other computer systems, e.g., host 1282 and server 1292.

FIG. 13 illustrates a chip set 1300 upon which an embodiment of the invention may be implemented. Chip set 1300 is programmed to capture image sequences for VPS requests as described herein and includes, for instance, the processor and memory components described with respect to FIG. 12 incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the chip set can be implemented in a single chip.

In one embodiment, the chip set 1300 includes a communication mechanism such as a bus 1301 for passing information among the components of the chip set 1300. A processor 1303 has connectivity to the bus 1301 to execute instructions and process information stored in, for example, a memory 1305. The processor 1303 may include one or more processing cores with each core configured to perform independently. A multi-core processor enables multiprocessing within a single physical package. Examples of a multi-core processor include two, four, eight, or greater numbers of processing cores. Alternatively or in addition, the processor 1303 may include one or more microprocessors configured in tandem via the bus 1301 to enable independent execution of instructions, pipelining, and multithreading. The processor 1303 may also be accompanied with one or more specialized components to perform certain processing functions and tasks such as one or more digital signal processors (DSP) 1307, or one or more application-specific integrated circuits (ASIC) 1309. A DSP 1307 typically is configured to process real-world signals (e.g., sound) in real time independently of the processor 1303. Similarly, an ASIC 1309 can be configured to performed specialized functions not easily performed by a general purposed processor. Other specialized components to aid in performing the inventive functions described herein include one or more field programmable gate arrays (FPGA) (not shown), one or more controllers (not shown), or one or more other special-purpose computer chips.

The processor 1303 and accompanying components have connectivity to the memory 1305 via the bus 1301. The memory 1305 includes both dynamic memory (e.g., RAM, magnetic disk, writable optical disk, etc.) and static memory (e.g., ROM, CD-ROM, etc.) for storing executable instructions that when executed perform the inventive steps described herein to capture image sequence for VPS requests. The memory 1305 also stores the data associated with or generated by the execution of the inventive steps.

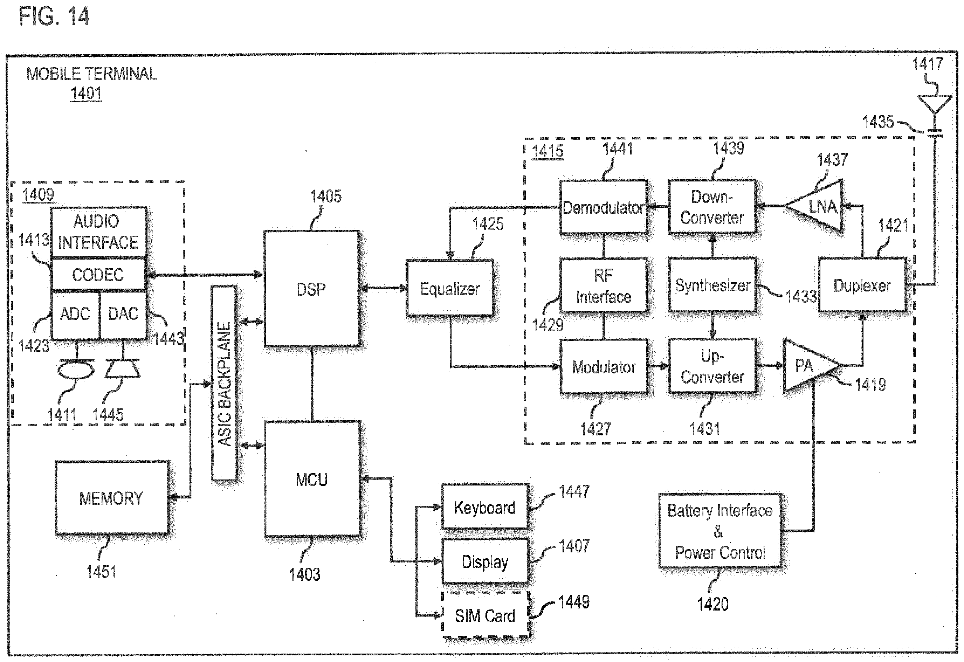

FIG. 14 is a diagram of exemplary components of a mobile terminal (e.g., handset) capable of operating in the system of FIG. 1, according to one embodiment. Generally, a radio receiver is often defined in terms of front-end and back-end characteristics. The front-end of the receiver encompasses all of the Radio Frequency (RF) circuitry whereas the back-end encompasses all of the base-band processing circuitry. Pertinent internal components of the telephone include a Main Control Unit (MCU) 1403, a Digital Signal Processor (DSP) 1405, and a receiver/transmitter unit including a microphone gain control unit and a speaker gain control unit. A main display unit 1407 provides a display to the user in support of various applications and mobile station functions that offer automatic contact matching. An audio function circuitry 1409 includes a microphone 1411 and microphone amplifier that amplifies the speech signal output from the microphone 1411. The amplified speech signal output from the microphone 1411 is fed to a coder/decoder (CODEC) 1413.

A radio section 1415 amplifies power and converts frequency in order to communicate with a base station, which is included in a mobile communication system, via antenna 1417. The power amplifier (PA) 1419 and the transmitter/modulation circuitry are operationally responsive to the MCU 1403, with an output from the PA 1419 coupled to the duplexer 1421 or circulator or antenna switch, as known in the art. The PA 1419 also couples to a battery interface and power control unit 1420.

In use, a user of mobile station 1401 speaks into the microphone 1411 and his or her voice along with any detected background noise is converted into an analog voltage. The analog voltage is then converted into a digital signal through the Analog to Digital Converter (ADC) 1423. The control unit 1403 routes the digital signal into the DSP 1405 for processing therein, such as speech encoding, channel encoding, encrypting, and interleaving. In one embodiment, the processed voice signals are encoded, by units not separately shown, using a cellular transmission protocol such as global evolution (EDGE), general packet radio service (GPRS), global system for mobile communications (GSM), Internet protocol multimedia subsystem (IMS), universal mobile telecommunications system (UMTS), etc., as well as any other suitable wireless medium, e.g., microwave access (WiMAX), Long Term Evolution (LTE) networks, code division multiple access (CDMA), wireless fidelity (WiFi), satellite, and the like.

The encoded signals are then routed to an equalizer 1425 for compensation of any frequency-dependent impairments that occur during transmission though the air such as phase and amplitude distortion. After equalizing the bit stream, the modulator 1427 combines the signal with a RF signal generated in the RF interface 1429. The modulator 1427 generates a sine wave by way of frequency or phase modulation. In order to prepare the signal for transmission, an up-converter 1431 combines the sine wave output from the modulator 1427 with another sine wave generated by a synthesizer 1433 to achieve the desired frequency of transmission. The signal is then sent through a PA 1419 to increase the signal to an appropriate power level. In practical systems, the PA 1419 acts as a variable gain amplifier whose gain is controlled by the DSP 1405 from information received from a network base station. The signal is then filtered within the duplexer 1421 and optionally sent to an antenna coupler 1435 to match impedances to provide maximum power transfer. Finally, the signal is transmitted via antenna 1417 to a local base station. An automatic gain control (AGC) can be supplied to control the gain of the final stages of the receiver. The signals may be forwarded from there to a remote telephone which may be another cellular telephone, other mobile phone or a land-line connected to a Public Switched Telephone Network (PSTN), or other telephony networks.

Voice signals transmitted to the mobile station 1401 are received via antenna 1417 and immediately amplified by a low noise amplifier (LNA) 1437. A down-converter 1439 lowers the carrier frequency while the demodulator 1441 strips away the RF leaving only a digital bit stream. The signal then goes through the equalizer 1425 and is processed by the DSP 1405. A Digital to Analog Converter (DAC) 1443 converts the signal and the resulting output is transmitted to the user through the speaker 1445, all under control of a Main Control Unit (MCU) 1403-which can be implemented as a Central Processing Unit (CPU) (not shown).

The MCU 1403 receives various signals including input signals from the keyboard 1447. The keyboard 1447 and/or the MCU 1403 in combination with other user input components (e.g., the microphone 1411) comprise a user interface circuitry for managing user input. The MCU 1403 runs a user interface software to facilitate user control of at least some functions of the mobile station 1401 to capture image sequence for VPS requests. The MCU 1403 also delivers a display command and a switch command to the display 1407 and to the speech output switching controller, respectively. Further, the MCU 1403 exchanges information with the DSP 1405 and can access an optionally incorporated SIM card 1449 and a memory 1451. In addition, the MCU 1403 executes various control functions required of the station. The DSP 1405 may, depending upon the implementation, perform any of a variety of conventional digital processing functions on the voice signals. Additionally, DSP 1405 determines the background noise level of the local environment from the signals detected by microphone 1411 and sets the gain of microphone 1411 to a level selected to compensate for the natural tendency of the user of the mobile station 1401.

The CODEC 1413 includes the ADC 1423 and DAC 1443. The memory 1451 stores various data including call incoming tone data and is capable of storing other data including music data received via, e.g., the global Internet. The software module could reside in RAM memory, flash memory, registers, or any other form of writable computer-readable storage medium known in the art including non-transitory computer-readable storage medium. For example, the memory device 1451 may be, but not limited to, a single memory, CD, DVD, ROM, RAM, EEPROM, optical storage, or any other non-volatile or non-transitory storage medium capable of storing digital data.

An optionally incorporated SIM card 1449 carries, for instance, important information, such as the cellular phone number, the carrier supplying service, subscription details, and security information. The SIM card 1449 serves primarily to identify the mobile station 1401 on a radio network. The card 1449 also contains a memory for storing a personal telephone number registry, text messages, and user specific mobile station settings.

While the invention has been described in connection with a number of embodiments and implementations, the invention is not so limited but covers various obvious modifications and equivalent arrangements, which fall within the purview of the appended claims. Although features of the invention are expressed in certain combinations among the claims, it is contemplated that these features can be arranged in any combination and order.

Embodiment 1:
A method comprising:

retrieving sensor data collected from one or more sensors of a device;
processing the sensor data to estimate a motion, a pose, a gesture, or a combination thereof associated with the device;
initiating an automatic capture of a sequence of at least two images by a camera sensor of the device based on determining that the motion, the pose, or a combination thereof meets one or more predetermined criteria; and
providing the sequence of the least two images, one or more features extracted from the sequence of the least two images, or a combination thereof as an output to generate a visual positioning service request.

Embodiment 2:
The method of embodiment 1, wherein the determining that the motion, the pose, or a combination thereof meets one or more predetermined criteria indicates that the sequence of the at least two images have a target image quality, have a target level of separation, or combination thereof for the visual positioning service request.

Embodiment 3:
The method of embodiment 1, wherein the motion is estimated based on an accelerometer variance estimation.

Embodiment 4:
The method of embodiment 1, further comprising:

processing the sensor data to construct a motion pattern divided into a designated number of data windows respectively containing the sensor data based on time, wherein each two adjacent data windows of the designated number of data windows comprises an envelope; and
extracting one or more sensor data features from the sensor data in one or more envelopes of the motion pattern, wherein the motion, the gesture, or a combination thereof is determined based on the one or more extracted sensor data features.

Embodiment 5:
The method of embodiment 4, further comprising:

generating one or more feature vectors for the one or more envelopes based on the one or more extracted sensor data features; and
determining a motion state of the device based on the one or more feature vectors,
wherein the motion, the gesture, or a combination thereof is determined based on the motion state.

Embodiment 6:
The method of embodiment 5, wherein the motion, the gesture, or a combination thereof is determined based on applying a maximum likelihood classification algorithm on the one or more feature vectors.

Embodiment 7:
The method of embodiment 6, further comprising:
determining a delay value of the maximum likelihood classification algorithm based on the determined motion state.

Embodiment 8:
The method of embodiment 1, wherein the pose is estimated based on the sensor data collected from an accelerometer.

Embodiment 9:
The method of embodiment 1, further comprising:

determining a body coordinate frame based on the sensor data; and
determining a locally level coordinate frame that is parallel to an upward vertical from the Earth's surface at a reference location,
wherein the pose is derived based on the body coordinate frame and the locally level coordinate frame.

Embodiment 10:
The method of embodiment 1, further comprising:

processing one or more images of the sequence of at least two images to detect an image blur level; and
initiating a recapture of the one or more images based on the image blur level.

Embodiment 11:
The method of embodiment 10, wherein the image blur level is detected based on a Laplacian variation calculation.

Embodiment 12:
The method of embodiment 1, further comprising:

performing a machine learning-based image segmentation on the sequence of at least two images,
wherein the one or more features extracted from the sequence of the at least two images is based on the machine learning-based image segmentation.

Embodiment 13:
The method of embodiment 1, wherein the visual positioning service request further includes environmental data, one or more positioning search constraints, or a combination thereof.

Embodiment 14:
An apparatus comprising:

at least one processor; and
at least one memory including computer program code for one or more programs,
the at least one memory and the computer program code configured to, with the at least one processor, cause the apparatus to perform at least the following,
retrieve sensor data collected from one or more sensors of a device;
process the sensor data to estimate a motion, a pose, a gesture, or a combination thereof associated with the device;
initiate an automatic capture of a sequence of at least two images by a camera sensor of the device based on determining that the motion, the pose, or a combination thereof meets one or more predetermined criteria; and
provide the sequence of the least two images, one or more features extracted from the sequence of the least two images, or a combination thereof as an output to generate a visual positioning service request.

Embodiment 15.
The apparatus of embodiment 14, wherein the determining that the motion, the pose, or a combination thereof meets one or more predetermined criteria indicates that the sequence of the at least two images have a target image quality, have a target level of separation, or combination thereof for the visual positioning service request.

Embodiment 16:
The apparatus of embodiment 14, wherein the motion is estimated based on an accelerometer variance estimation.

Embodiment 17:
The apparatus of embodiment 14, wherein the apparatus is further caused to:

process the sensor data to construct a motion pattern divided into a designated number of data windows respectively containing the sensor data based on time, wherein each two adjacent data windows of the designated number of data windows comprises an envelope; and
extract one or more sensor data features from the sensor data in one or more envelopes of the motion pattern, wherein the motion, the gesture, or a combination thereof is determined based on the one or more extracted sensor data features.

Embodiment 18:
A non-transitory computer-readable storage medium carrying one or more sequences of one or more instructions which, when executed by one or more processors, cause an apparatus to at least perform the following steps:

retrieving sensor data collected from one or more sensors of a device;
processing the sensor data to estimate a motion, a pose, a gesture, or a combination thereof associated with the device;
initiating an automatic capture of a sequence of at least two images by a camera sensor of the device based on determining that the motion, the pose, or a combination thereof meets one or more predetermined criteria; and
providing the sequence of the least two images, one or more features extracted from the sequence of the least two images, or a combination thereof as an output to generate a visual positioning service request.

Embodiment 19:
The non-transitory computer-readable storage medium of embodiment 18, wherein the determining that the motion, the pose, or a combination thereof meets one or more predetermined criteria indicates that the sequence of the at least two images have a target image quality, have a target level of separation, or combination thereof for the visual positioning service request.

Embodiment 20:
The non-transitory computer-readable storage medium of embodiment 18, wherein the apparatus is caused to further perform:

processing the sensor data to construct a motion pattern divided into a designated number of data windows respectively containing the sensor data based on time, wherein each two adjacent data windows of the designated number of data windows comprises an envelope;
extracting one or more sensor data features from the sensor data in one or more envelopes of the motion pattern, wherein the motion, the gesture, or a combination thereof is determined based on the one or more extracted sensor data features.

**Claims**

1. A method comprising:

   retrieving sensor data collected from one or more sensors of a device;
   processing the sensor data to estimate a motion, a pose, a gesture, or a combination thereof associated with the device;
   initiating an automatic capture of a sequence of at least two images by a camera sensor of the device based on determining that the motion, the pose, or a combination thereof meets one or more predetermined criteria; and
   providing the sequence of the least two images, one or more features extracted from the sequence of the least two images, or a combination thereof as an output to generate a visual positioning service request.

2. The method of claim 1, wherein the determining that the motion, the pose, or a combination thereof meets one or more predetermined criteria indicates that the sequence of the at least two images have a target image quality, have a target level of separation, or combination thereof for the visual positioning service request; and/or wherein the motion is estimated based on an accelerometer variance estimation.

3. The method of any of the preceding claims, further comprising:

processing the sensor data to construct a motion pattern divided into a designated number of data windows respectively containing the sensor data based on time, wherein each two adjacent data windows of the designated number of data windows comprises an envelope; and
extracting one or more sensor data features from the sensor data in one or more envelopes of the motion pattern, wherein the motion, the gesture, or a combination thereof is determined based on the one or more extracted sensor data features.

4. The method of claim 3, further comprising:

generating one or more feature vectors for the one or more envelopes based on the one or more extracted sensor data features; and
determining a motion state of the device based on the one or more feature vectors,
wherein the motion, the gesture, or a combination thereof is determined based on the motion state.

5. The method of claim 4, wherein the motion, the gesture, or a combination thereof is determined based on applying a maximum likelihood classification algorithm on the one or more feature vectors.

6. The method of claim 5, further comprising:
determining a delay value of the maximum likelihood classification algorithm based on the determined motion state.

7. The method of any of the preceding claims, wherein the pose is estimated based on the sensor data collected from an accelerometer.

8. The method of any of the preceding claims, further comprising:

determining a body coordinate frame based on the sensor data; and
determining a locally level coordinate frame that is parallel to an upward vertical from the Earth's surface at a reference location,
wherein the pose is derived based on the body coordinate frame and the locally level coordinate frame; and/or further comprising:

processing one or more images of the sequence of at least two images to detect an image blur level; and
initiating a recapture of the one or more images based on the image blur level.

9. The method of claim 8, wherein the image blur level is detected based on a Laplacian variation calculation.

10. The method of any of the preceding claims, further comprising:

performing a machine learning-based image segmentation on the sequence of at least two images,
wherein the one or more features extracted from the sequence of the at least two images is based on the machine learning-based image segmentation.

11. The method of any of the preceding claims, wherein the visual positioning service request further includes environmental data, one or more positioning search constraints, or a combination thereof.

12. An apparatus comprising means for:

retrieving sensor data collected from one or more sensors of a device;
processing the sensor data to estimate a motion, a pose, a gesture, or a combination thereof associated with the device;
initiating an automatic capture of a sequence of at least two images by a camera sensor of the device based on determining that the motion, the pose, or a combination thereof meets one or more predetermined criteria; and

providing the sequence of the least two images, one or more features extracted from the sequence of the least two images, or a combination thereof as an output to generate a visual positioning service request.

13. The apparatus of claim 12, wherein the determining that the motion, the pose, or a combination thereof meets one or more predetermined criteria indicates that the sequence of the at least two images have a target image quality, have a target level of separation, or combination thereof for the visual positioning service request.

14. The apparatus of claim 12 or claim 13, wherein the motion is estimated based on an accelerometer variance estimation.

15. The apparatus of any of the claims 12 to 14, wherein the apparatus further comprises means for:

processing the sensor data to construct a motion pattern divided into a designated number of data windows respectively containing the sensor data based on time, wherein each two adjacent data windows of the designated number of data windows comprises an envelope; and
extracting one or more sensor data features from the sensor data in one or more envelopes of the motion pattern, wherein the motion, the gesture, or a combination thereof is determined based on the one or more extracted sensor data features.

FIG. 1

100

123

125

115

VPS DATA 107

IMAGE DATA 109

GEOGRAPHIC DATABASE 103

MAPPING PLATFORM 101

VISUAL POSITIONING SERVICE (VPS) 105

USER EQUIPMENT (UE) 111

SENSORS 117 (E.G., CAMERA)

IMAGING SYSTEM 119

APPLICATION 121 (E.G., AR, MAP, ETC.)

113

COMMUNICATION NETWORK 127

SERVICES PLATFORM 129

SERVICE 131a

SERVICE 131j

CONTENT PROVIDER 133a

CONTENT PROVIDER 133k

EP 4 019 898 A1

FIG. 2

IMAGING SYSTEM 103

SENSOR DATA
MODULE 201

MOTION
MODULE 203

ORIENTATION
MODULE 205

MACHINE LEARNING
MODULE 207

CAPTURE
MODULE 209

OUTPUT
MODULE 211

EP 4 019 898 A1

FIG. 3

300

```
┌─────────────────────────────┐
│   RETRIEVE SENSOR DATA FROM  │◄──┐
301│          DEVICE             │   │
└─────────────────────────────┘   │
              │                   │
              ▼                   │
┌─────────────────────────────┐   │
│    PROCESS SENSOR DATA TO    │   │
303│ DETERMINE MOTION, POSE, AND/OR │ │
│          GESTURE            │   │
└─────────────────────────────┘   │
              │                   │
              ▼                   │
           ╱─────────╲            │
          ╱   MEETS    ╲    NO    │
305      ╱  CRITERIA?    ╲────────┘
         ╲             ╱
          ╲─────────╱
              │
             YES
              ▼
┌─────────────────────────────┐
│  INITIATE AUTOMATIC CAPTURE OF │
307│       IMAGE SEQUENCES        │
└─────────────────────────────┘
              │
              ▼
┌─────────────────────────────┐
│  PROVIDE SEQUENCE AND/OR IMAGE │
│  FEATURES AS OUTPUT FOR VISUAL │
309│ POSITIONING SERVICE (VPS) REQUEST │
└─────────────────────────────┘
```

EP 4 019 898 A1

FIG. 4

400

Motion pattern (gesture) 401

Window 0 — Window 1 — Window 2 — ... — Window N

Envelope 0 — Envelope 1 — Envelope N-1

FIG. 5

OFFLINE          ONLINE

```
TRAINING DATA
503
```

```
DATA 509
```

```
FEATURE
EXTRACTION 505
```

```
FEATURE
EXTRACTION 511
```

MODEL 501

```
TRAINING 507
```

```
DECISION 513
```

FIG. 6

EP 4 019 898 A1

FIG. 7

Z
YAW

701

UE 111

705

Y
ROLL

703

X
PITCH

EP 4 019 898 A1

FIG. 8A

800

Z (UP)

Y (FORWARD DIRECTION)

UE 111

X (RIGHT DIRECTION)

## FIG. 8B

820

Zi  Ze

NORTH POLE

GREENWICH
MERIDIAN

u

n

e

821

Xi

Xe

Ye

Yi

EARTH CENTERED INERTIAL (ECI) (i)
EARTH CENTERED EARTH FIXED (ECEF) (e)

EP 4 019 898 A1

## FIG. 9

900

| 901 Hardware | 903 Application | 905 Library | 907 Cloud |

909 — Initialization (Application → Library)

911 — Location Request (Application → Library)

913 — Orientation and Motion Detection (Library)

915 — Image Capture Call-back (Library → Application)

917 — Capture: ARkit/core (Application → Hardware)

919 — Image/intrinsic (Hardware → Library)

921 — Blur Detection (Library)

923 — Location Request (Library → Cloud)

925 — Location Response (Cloud → Library)

927 — Confidence Validation (Library)

929 — Location Response (Library → Application)

EP 4 019 898 A1

# FIG. 10A

EP 4 019 898 A1

# FIG. 10B

<u>1000</u> (CONTINUED)

Image capture sequence is repeated until confidence passes or timeout occurs. Number of repeat instances can be limited using configuration parameter; typical value is 3.

EP 4 019 898 A1

FIG. 11

GEOGRAPHIC DATABASE 103

GEOGRAPHIC DATA 1101

NODE DATA RECORDS 1103

ROAD SEGMENT DATA RECORDS 1105

POI DATA RECORDS 1107

VISUAL POSITIONING DATA RECORDS 1109

HD MAPPING DATA RECORDS 1111

INDEXES 1113

EP 4 019 898 A1

# FIG. 12

EP 4 019 898 A1

FIG. 13

1300

PROCESSOR
1303

DSP 1307

ASIC 1309

BUS 1301

MEMORY 1305

EP 4 019 898 A1

# FIG. 14

MOBILE TERMINAL
1401

1409
AUDIO INTERFACE
1413
CODEC
ADC    DAC
1423        1443
1411    1445

ASIC BACKPLANE

DSP
1405

MEMORY
1451

MCU
1403

Equalizer
1425

Demodulator
1441

Down-Converter
1439

LNA
1437

RF Interface
1429

Synthesizer
1433

Duplexer
1421

Modulator
1427

Up-Converter
1431

PA
1419

Keyboard
1447

Display
1407

SIM Card
1449

Battery Interface & Power Control
1420

1435

1415

1417

EP 4 019 898 A1

Europäisches
Patentamt

European
Patent Office

Office européen
des brevets

# EUROPEAN SEARCH REPORT

**Application Number**

EP 21 21 7021

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 310 326 A (BEIJING BAIDU NETCOM SCI & TEC) 8 October 2019 (2019-10-08) | 1-6,12, 13,15 | INV. G01C21/00 |
| Y | * the whole document * | 7-11,14 | G01C21/36 G06T7/70 |
| Y | US 2020/364898 A1 (LAWLOR DAVID JOHNSTON [US] ET AL) 19 November 2020 (2020-11-19) * paragraphs [0033], [0078] * | 7,11,14 | G06V20/50 |
| Y | US 2013/057713 A1 (KHAWAND CHARBEL [US]) 7 March 2013 (2013-03-07) * paragraph [0079] * | 8,9 | |
| Y | EP 3 706 072 A1 (HERE GLOBAL BV [NL]) 9 September 2020 (2020-09-09) * paragraphs [0003] - [0007], [0031] * | 10 | |

**TECHNICAL FIELDS SEARCHED (IPC)**

G06T
H04N
G06V
G01C
G06K

The present search report has been drawn up for all claims

| Place of search | Date of completion of the search | Examiner |
|---|---|---|
| The Hague | 12 May 2022 | de la Rosa Rivera, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 7021

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2022

| Patent document cited in search report | | Publication date | Patent family member(s) | | Publication date |
|---|---|---|---|---|---|
| CN 110310326 | A | 08-10-2019 | NONE | | |
| US 2020364898 | A1 | 19-11-2020 | NONE | | |
| US 2013057713 | A1 | 07-03-2013 | CN | 102883104 A | 16-01-2013 |
| | | | CN | 107820021 A | 20-03-2018 |
| | | | US | 2013057713 A1 | 07-03-2013 |
| | | | WO | 2013033480 A1 | 07-03-2013 |
| EP 3706072 | A1 | 09-09-2020 | EP | 3706072 A1 | 09-09-2020 |
| | | | US | 2020285862 A1 | 10-09-2020 |

For more details about this annex : see Official Journal of the European Patent Office, No. 12/82

EPO FORM P0459